# EUROPEAN PATENT SPECIFICATION

(11) **EP 2 889 208 B1**
(45) Date of publication and mention of the grant of the patent: **25.05.2016**
(21) Application number: 14198883.2
(22) Date of filing: 18.12.2014
(51) Int. Cl.: B62J 15/00, B62J 15/02, B62J 13/02

(54) **Motorcycle**
Motorrad
Motocyclette

(30) Priority: 25.12.2013 JP 2013267463
(43) Date of publication of application: 01.07.2015
(73) Proprietor: Yamaha Hatsudoki Kabushiki Kaisha, Iwata-shi, Shizuoka 438-8501 (JP)
(72) Inventor: Weragala, Don Gayan Krishantha, Iwata-shi, Shizuoka 438-8501 (JP)
(74) Representative: Grünecker Patent- und Rechtsanwälte PartG mbB

(56) References cited:
- EP-A2- 2 433 855
- JP-A- H1 035 562

## Description

The present invention relates to a motorcycles according to the preamble of independent claim 1. Such a motorcycle can be taken from the prior art document JP H10-35562 A.

Prior art document EP 2 433 855 A2 discloses a motorcycle with a seat frame portion connected to a main frame portion and extending rearward. A seat is arranged above the seat frame. A rear wheel is arranged below the seat frame portion. A rear arm supports the rear wheel in vertically moveable fashion. A rear fender connects to the rear arm. The rear fender is situated at least partly between the seat frame portion and the rear wheel in the vertical direction. A sari guard is arranged at least partly to the side of the rear wheel. The rear end of the rear fender is situated rearward from the upper end of the rear wheel. The lower portion of the sari guard connects to the rear arm. The upper portion of the sari guard connects to the rear fender.

A motorcycle equipped with a rear fender that is swingable up and down along with a rear arm and a rear wheel (hereinafter referred to as "movable rear fender") has conventionally been known. The movable rear fender is disposed near the rear wheel. Since the movable rear fender swings up and down along with the rear wheel, the gap between the movable rear fender and the rear wheel is constant at all times. The movable rear fender does not greatly move away from the rear wheel while the motorcycle is traveling. As a result, the movable rear fender shows high mud guarding performance.

In order to further improve the mud guarding performance of the movable rear fender, it is preferable to increase the size of the movable rear fender. JP 2010-215216 A discloses a movable rear fender including a fender main unit positioned above the rear wheel, a flat plate-shaped left side face portion positioned to the left of the rear wheel, and a flat plate-shaped right side face portion positioned to the right of the rear wheel.

When the left and right side face portions are in a flat plate shape and also have a large area, the left and right side face portions tend to bend easily. For this reason, the left and right side face portions may vibrate while the motorcycle is traveling, causing noise. In order to prevent such noise, it is possible to form holes in the left side face portion or the right side face portion. However, providing such holes decreases the rigidity of the left side face portion or the right side face portion.

In order to increase the rigidity of the movable rear fender, it appears possible to form the movable rear fender using a high-rigidity metallic material. This, however, increases the weight of the movable rear fender. Because the movable rear fender swings together with the rear arm and the rear wheel, such an increase in the weight of the movable rear fender results in an increase in the weight of the swingable portions of the motorcycle. This means an increase in what is called unsprung weight. The increase in unsprung weight leads to poor riding comfort.

The present invention has been accomplished in view of the foregoing and other problems, and it is an object of the invention to provide a motorcycle that is equipped with a movable rear fender having high mud guarding performance and high rigidity, and that has a reduced unsprung weight.

According to the present invention said object is solved by a motorcycle having the features of independent claim 1. Preferred embodiments are laid down in the dependent claims.

It is provided a motorcycle comprising: a body frame extending in a vehicle longitudinal direction; a seat disposed above the body frame; a rear arm supported swingably by the body frame and disposed below the seat; a rear wheel supported by the rear arm and disposed downward relative to the seat; and a rear fender at least a portion of which being disposed below the seat and above the rear wheel. The rear fender includes a fender main body disposed above the rear wheel, a left side guard disposed to the left of the rear wheel, and a right side guard disposed to the right of the rear wheel. Each of the fender main body, the left side guard, and the right side guard is formed of plastic. The left side guard comprises a left side guard body portion at least a portion of which being positioned above the rear arm as viewed from the left side of the motorcycle, and a first left arm portion extending from the left side guard body portion to the fender main body. The right side guard comprises a right side guard body portion at least a portion of which being positioned above the rear arm as viewed from the right side of the motorcycle, and a first right arm portion extending from the right side guard body portion to the fender main body. The left side guard body portion is connected to the fender main body at a position frontward relative to the center of the rear wheel, and the first left arm portion is connected to the fender main body at a position rearward relative to the center of the rear wheel. The right side guard body portion is connected to the fender main body at a position frontward relative to the center of the rear wheel, and the first right arm portion is connected to the fender main body at a position rearward relative to the center of the rear wheel. A first left opening is defined by the fender main body, the left side guard body portion, and the first left arm portion, as viewed from the left side of the motorcycle. A first right opening is defined by the fender main body, the right side guard body portion, and the first right arm portion, as viewed from the right side of the motorcycle.

In the above-described motorcycle, the rear fender includes the left and right side guards in addition to the fender main body. The left side guard prevents mud from splashing leftward from the rear wheel. The right side guard prevents mud from splashing rightward from the rear wheel. As a result, the mud guarding performance of the rear fender can be enhanced.

In addition, the rear fender has the first left opening and the first right opening formed therein. The left and right side guards do not easily bend, so they are unlikely to vibrate while the motorcycle is traveling. Thus, the noise resulting from the left and right side guards can be suppressed.

The rear fender can be made light in weight because each of the fender main body, the left side guard, and the right side guard is formed of plastic. The rear fender can be made light in weight also because the rear fender has the first left opening and the first right opening formed therein. As a result, the unsprung weight can be reduced.

The left side guard comprises a left side guard body portion at least a portion of which being positioned above the rear arm as viewed from the left side of the motorcycle, and a first left arm portion extending from the left side guard body portion to the fender main body. In addition, the left side guard body portion is connected to the fender main body at a position frontward relative to the center of the rear wheel, and the first left arm portion is connected to the fender main body at a position rearward relative to the center of the rear wheel. The right side guard comprises a right side guard body portion at least a portion of which being positioned above the rear arm as viewed from the right side of the motorcycle, and a first right arm portion extending from the right side guard body portion to the fender main body. In addition, the right side guard body portion is connected to the fender main body at a position frontward relative to the center of the rear wheel, and the first right arm portion is connected to the fender main body at a position rearward relative to the center of the rear wheel. Such a configuration makes it possible to provide the rear fender with sufficient rigidity, although the fender main body, the left side guard, and the right side guard are formed of plastic and moreover the rear fender has the first left opening and the first right opening. In addition, the fender main body, the left side guard, and the right side guard are separate parts, and it is unnecessary to form these parts integrally with each other. The fender main body, the left side guard, and the right side guard with the above-described configuration can be manufactured easily, and the rear fender with the above-described configuration can be manufactured easily by assembling these parts together.

Thus, it is made possible to provide a motorcycle that is equipped with a movable rear fender having high mud guarding performance and high rigidity, and that has a reduced unsprung weight.

In one preferred embodiment, the rear wheel further includes an axle shaft. The motorcycle further comprises: a power unit including an output shaft; a first sprocket secured to the output shaft; a second sprocket secured to the axle shaft of the rear wheel and disposed to the left of the rear wheel; a chain wrapped around the first sprocket and the second sprocket; and a chain cover disposed to the left of a portion of the chain. The chain cover is integrally formed with the left side guard.

With the just-described embodiment, the overall size of the chain cover and the rear fender can be made small because the chain cover is integrated with the left side guard. In addition, the parts count can be reduced.

In another preferred embodiment, a gap between the left side guard and the second sprocket along a vehicle width direction is smaller than a width of the chain.

With the just-described embodiment, the chain does not get into the gap between the left side guard and the second sprocket even if the chain comes off the second sprocket. Thus, the chain is prevented from making contact with the axle shaft.

In another preferred embodiment, the rear wheel further includes an axle shaft. The motorcycle further comprises: a power unit including an output shaft; a first sprocket secured to the output shaft; a second sprocket secured to the axle shaft of the rear wheel and disposed to the right of the rear wheel; a chain wrapped around the first sprocket and the second sprocket; and a chain cover disposed to the right of a portion of the chain. The chain cover is integrally formed with the right side guard.

With the just-described embodiment, the overall size of the chain cover and the rear fender can be made small because the chain cover is integrated with the right side guard. In addition, the parts count can be reduced.

In another preferred embodiment, a gap between the right side guard and the second sprocket along a vehicle width direction is smaller than a width of the chain.

With the just-described embodiment, the chain does not get into the gap between the right side guard and the second sprocket even if the chain comes off the second sprocket. Thus, the chain is prevented from making contact with the axle shaft.

In another preferred embodiment, a front end of the fender main body is positioned frontward relative to a front end of the rear wheel, and a rear end of the fender main body is positioned rearward relative to a rear end of the rear wheel.

With the above-described embodiment, the mud guarding performance of the rear fender can be further enhanced because the size of the fender main body along the vehicle longitudinal direction is very large. Since the fender main body is formed of plastic, the weight of the fender main body is kept low although the size of the fender main body along the vehicle longitudinal direction is large, so the unsprung weight can be reduced. Moreover, since the left and right side guards support the fender main body, the fender main body is prevented from bending although the size of the fender main body along the vehicle longitudinal direction is large. As a result, it is possible to provide the rear fender with sufficient rigidity.

In another preferred embodiment, the left side guard body portion and/or the right side guard body portion has a C-shaped cross-sectional shape.

With the just-described embodiment, the rigidity of the left side guard body portion and/or the right side guard body portion can be increased. Since the left side guard and the right side guard are separate parts from the fender main body, the left side guard body portion and/or the right side guard body portion with the above-described configuration can be manufactured easily.

In another preferred embodiment, the first left arm portion and/or the first right arm portion has a C-shaped cross-sectional shape.

With the just-described embodiment, the rigidity of the first left arm portion and/or the first right arm portion can be increased. Since the left side guard and the right side guard are separate parts from the fender main body, the first left arm portion and/or the first right arm portion with the above-described configuration can be manufactured easily.

In another preferred embodiment, the left side guard includes a second left arm portion extending from the left side guard body portion to the fender main body and connected to the fender main body at a position rearward relative to the first left arm portion. At least a portion of a second left opening is defined by the fender main body, the first left arm portion, and the second left arm portion, as viewed from the left side of the motorcycle.

In the just-described embodiment, the left side guard body portion is connected to the fender main body by the first left arm portion and the second left arm portion. As a result, the rigidity of the rear fender can be further increased. The second left arm portion further prevents mud from splashing leftward from the rear wheel. Because the second left opening is formed between the first left arm portion and the second left arm portion, the noise resulting from the left side guard can be further suppressed. In addition, the unsprung weight can be reduced.

In another preferred embodiment, the right side guard includes a second right arm portion extending from the right side guard body portion to the fender main body and connected to the fender main body at a position rearward relative to the first right arm portion. At least a portion of a second right opening is defined by the fender main body, the first right arm portion, and the second right arm portion, as viewed from the right side of the motorcycle.

In the just-described embodiment, the right side guard body portion is connected to the fender main body by the first right arm portion and the second right arm portion. As a result, the rigidity of the rear fender can be further increased. The second right arm portion further prevents mud from splashing rightward from the rear wheel. Because the second right opening is formed between the first right arm portion and the second right arm portion, the noise resulting from the right side guard can be further suppressed. In addition, the unsprung weight can be reduced.

In another preferred embodiment, the second right arm portion has a C-shaped cross-sectional shape.

With the just-described embodiment, the rigidity of the second right arm portion can be increased. Since the right side guard is a separate part from the fender main body and the left side guard, the second right arm portion with the above-described configuration can be manufactured easily.

In another preferred embodiment, a third left opening is defined by the left side guard body portion and the rear arm, as viewed from the left side of the motorcycle.

With the just-described embodiment, the noise resulting from the left side guard can be further suppressed. In addition, the unsprung weight can be reduced.

In another preferred embodiment, a third right opening is defined by the right side guard body portion and the rear arm, as viewed from the right side of the motorcycle.

With the just-described embodiment, the noise resulting from the right side guard can be further suppressed. In addition, the unsprung weight can be reduced.

In another preferred embodiment, the fender main body comprises a left wall extending vertically and positioned to the left of the rear wheel, and a right wall extending vertically and positioned to the right of the rear wheel. The left wall comprises, as viewed from the left side of the motorcycle, a first left wall portion positioned on a vertical line through the center of the rear wheel, and a second left wall portion positioned at the rear of the first left wall portion. The right wall comprises, as viewed from the right side of the motorcycle, a first right wall portion positioned on a vertical line through the center of the rear wheel, and a second right wall portion positioned at the rear of the first rear wall portion. A dimension of the second left wall portion along a radial direction of the rear wheel is greater than a dimension of the first left wall portion along a radial direction of the rear wheel. A dimension of the second right wall portion along a radial direction of the rear wheel is greater than a dimension of the first right wall portion along a radial direction of the rear wheel. The first left arm portion is mounted to the second left wall portion. The first right arm portion is mounted to the second right wall portion.

In the just-described embodiment, the first left arm portion is mounted to a portion of the left wall of the fender main body that has a greater radial dimension. Therefore, the first left arm portion and the fender main body can be firmly secured to each other. In the just-described embodiment, the first right arm portion is mounted to a portion of the right wall of the fender main body that has a greater radial dimension. Therefore, the first right arm portion and the fender main body can be firmly secured to each other. As a result, the rigidity of the rear fender can be increased.

In another preferred embodiment, the body frame includes a frame portion disposed above the rear fender. The fender main body comprises a first circumferential wall positioned frontward relative to the center of the rear wheel, a second circumferential wall positioned at the rear of the first circumferential wall, and a third circumferential wall positioned at the rear of the second circumferential wall. At least a portion of the second circumferential wall is disposed below the frame portion, and the second circumferential wall is recessed radially inward of the rear wheel relative to the first circumferential wall and the third circumferential wall.

The just-described embodiment ensures that a large gap is provided between the frame portion of the body frame and the second circumferential wall of the fender main body. This can more reliably prevent the rear fender from coming into contact with the frame portion when the rear fender moves upward together with the rear arm while the motorcycle is traveling.

### ADVANTAGEOUS EFFECTS OF INVENTION

The present invention makes it possible to provide a motorcycle that is equipped with a movable rear fender having high mud guarding performance and high rigidity, and that has a reduced unsprung weight.

### BRIEF DESCRIPTION OF DRAWINGS

[Fig. 1] Fig. 1 is a left side view illustrating a motorcycle according to one preferred embodiment.
[Fig. 2] Fig. 2 is a left side view illustrating a rear wheel, a rear fender, and a rear arm.
[Fig. 3] Fig. 3 is a right side view illustrating the rear wheel, the rear fender, and the rear arm.
[Fig. 4] Fig. 4 is a perspective view illustrating the rear wheel, the rear fender, and the rear arm.
[Fig. 5] Fig. 5 is a perspective view illustrating a fender main body.
[Fig. 6] Fig. 6 is a left side view illustrating the fender main body.
[Fig. 7] Fig. 7 is a front view illustrating a left side guard.
[Fig. 8] Fig. 8 is a reverse side view illustrating the left side guard.
[Fig. 9] Fig. 9 is a cross-sectional view taken along line IX-IX in Fig. 7.
[Fig. 10] Fig. 10 is a cross-sectional view taken along line X-X in Fig. 7.
[Fig. 11] Fig. 11 is a cross-sectional view taken along line XI-XI in Fig. 7.
[Fig. 12] Fig. 12 is a cross-sectional view taken along line XII-XII in Fig. 7.
[Fig. 13] Fig. 13 is a cross-sectional view taken along line XIII-XIII in Fig. 7.
[Fig. 14] Fig. 14 is a cross-sectional view taken along line XIV-XIV in Fig. 7.
[Fig. 15] Fig. 15 is a front view illustrating a right side guard.
[Fig. 16] Fig. 16 is a reverse side view illustrating the right side guard.
[Fig. 17] Fig. 17 is a rear view illustrating the rear wheel, the rear fender, and the rear arm.
[Fig. 18] Fig. 18 is a rear view illustrating a rear wheel, a rear fender, and a rear arm according to another embodiment.
[Fig. 19] Fig. 19 is a front view illustrating a right side guard according to another embodiment.

### DESCRIPTION OF EMBODIMENTS

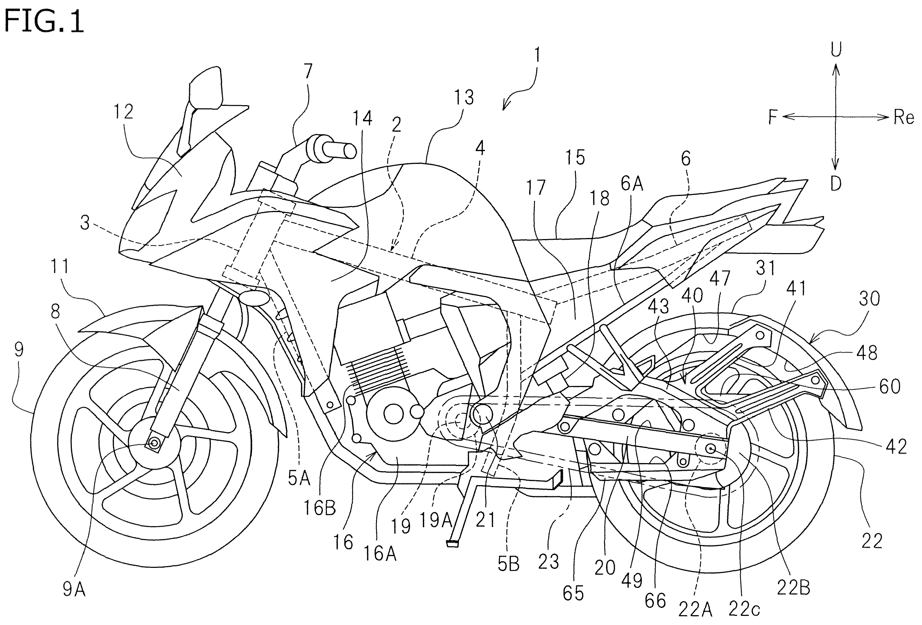

Hereinbelow, preferred embodiments will be described. Fig. 1 is a left side view illustrating a motorcycle 1 according to one preferred embodiment. In the following description, the terms "front," "rear," "left," "right," "up," and "down" respectively refer to front, rear, left, right, up, and down as defined based on the perspective of the rider (not shown) seated on the seat 15 of the motorcycle 1 being at a standstill. Reference characters F, Re, L, R, U, and D in the drawings indicate front, rear, left, right, up, and down, respectively.

The motorcycle 1 includes a body frame 2 extending in a vehicle longitudinal direction. The body frame 2 has a main frame 4 extending rearward from a head pipe 3, a down frame 5A extending rearward from the head pipe 3, a down frame 5B extending downward from a rear portion of the main frame 4, a seat frame 6 extending rearward from a rear portion of the main frame 4, and a backstay 6A extending rearward from the down frame 5B. The down frame 5A is disposed below the main frame 4. The seat frame 6 is inclined with respect to the horizontal line so that its rear portion is positioned higher than its front portion. The seat frame 6 extends rearward and obliquely upward. The backstay 6A is an example of "the frame portion of the body frame". The front end portion of the backstay 6A is connected to the down frame 5B, and the rear end portion of the backstay 6A is connected to the seat frame 6. The backstay 6A is inclined with respect to the horizontal line so that its rear portion is positioned higher than its front portion. The backstay 6A extends rearward and obliquely upward. The backstay 6A is disposed below the seat frame 6. The backstay 6A is disposed above a later-described rear fender 30. Note that the above-described configuration of the body frame 2 is merely an example. The configuration of the body frame 2 is not particularly limited.

A front cowl 12 is disposed in front of the head pipe 3. A left side cover 14 is disposed to the left of the head pipe 3. Although not shown in the drawings, a right side cover is disposed to the right of the head pipe 3. A steering shaft, not shown, is inserted through the head pipe 3. A handlebar 7 is secured to the steering shaft. A front fork 8 is secured to the steering shaft. An axle shaft 9A of a front wheel 9 is supported at a lower end portion of the front fork 8. A front fender 11 is disposed above the front wheel 9.

A fuel tank 13 is disposed at the rear of the head pipe 3. A seat 15 is disposed at the rear of the fuel tank 13. The seat 15 is supported by the seat frame 6. The seat 15 is disposed above the seat frame 6. In other words, the seat 15 is disposed above the body frame 2. A power unit 16 is disposed below the fuel tank 13. At least a portion of the power unit 16 is supported by a down frame 5A and a down frame 5B. The power unit 16 includes an internal combustion engine, a clutch, and a transmission, which are not shown in the drawings. The power unit 16 has a crankcase 16A and a cylinder extending upward from a front portion of the crankcase 16A. A left side cover 17 is disposed below a portion of the fuel tank 13 and the seat 15. Although not shown in the drawings, a right side cover is disposed to the right of the left side cover 17. The right side cover is disposed below a portion of the fuel tank 13 and the seat 15.

A rear arm 20 is supported swingably on the body frame 2. In the present preferred embodiment, a pivot shaft 21 is provided on the down frame 5B of the body frame 2. A front end portion of the rear arm 20 is supported swingably by the pivot shaft 21. The supporting structure for the rear arm 20 is, however, not particularly limited. The rear arm 20 is disposed below the seat 15. A rear wheel 22 is supported at a rear portion of the rear arm 20. The rear wheel 22 is disposed downward relative to the seat 15. A rear suspension unit 18 is connected to the body frame 2 and the rear arm 20. An upper end portion of the rear suspension unit 18 is supported on the body frame 2, and a lower end portion of the rear suspension unit 18 is supported on the rear arm 20.

The power unit 16 has an output shaft 19. The output shaft 19 is a shaft for outputting the drive force of the power unit 16. When the power unit 16 operates, the output shaft 19 rotates. A first sprocket 19A is secured to the output shaft 19. A second sprocket 22B is secured to an axle shaft 22A of the rear wheel 22. The second sprocket 22B is disposed to the left of the rear wheel 22. A chain 23 is wrapped around the first sprocket 19A and the second sprocket 22B. The chain 23 is one example of power transmission member for transmitting the mechanical power of the power unit 16 to the rear wheel 22. The power transmission member is, however, not limited to the chain 23. The power transmission member may be, for example, a transmission belt or a drive shaft.

The motorcycle 1 has a rear fender 30. The rear fender 30 is what is called a movable rear fender and is swingable vertically together with rear wheel 22 and the rear arm 20. At least a portion of the rear fender 30 is disposed below the seat 15 and above the rear wheel 22.

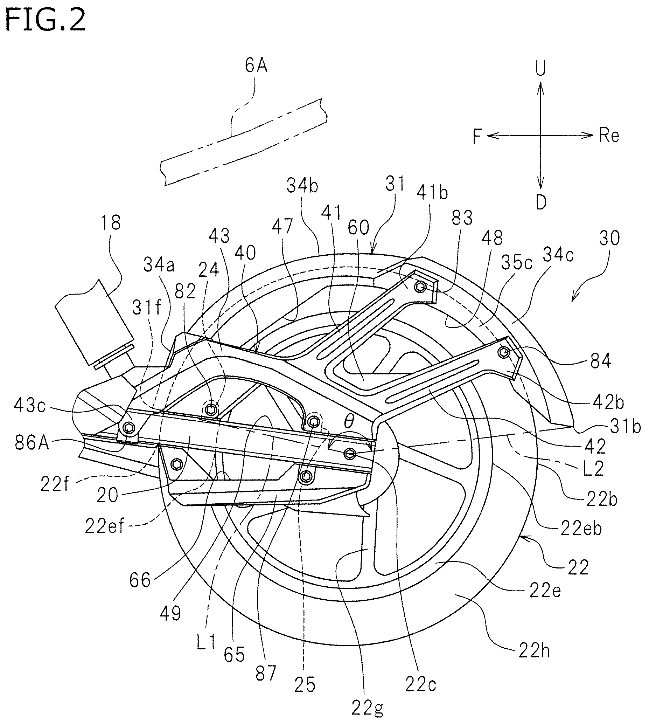

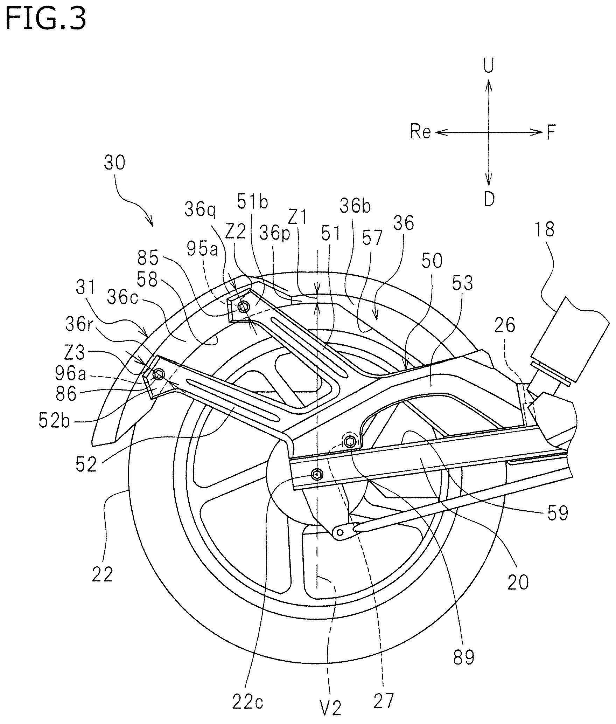

Fig. 2 is a left side view illustrating the rear wheel 22, the rear fender 30, and the rear arm 20. Fig. 3 is a right side view illustrating the rear wheel 22, the rear fender 30, and the rear arm 20. The rear fender 30 includes a fender main body 31 disposed above the rear wheel 22, a left side guard 40 disposed to the left of the rear wheel 22, and a right side guard 50 disposed to the right of the rear wheel 22. The fender main body 31, the left side guard 40, and the right side guard 50 are separate components, which can be separated from each other. The rear fender 30 is formed by assembling the fender main body 31, the left side guard 40, and the right side guard 50 together. Each of the fender main body 31, the left side guard 40, and the right side guard 50 is formed of plastic. The fender main body 31, the left side guard 40, and the right side guard 50 may be formed of either the same type of plastic or different types of plastics.

As illustrated in Fig. 2, the fender main body 31 is formed in a circular arc shape having the center 22c of the rear wheel 22 as its center, as viewed from one side of the motorcycle. The fender main body 31 is formed so that its size along the vehicle longitudinal direction is large. In the present preferred embodiment, the front end 31f of the fender main body 31 is positioned frontward relative to the front end 22f of the rear wheel 22. The rear end 31 b of the fender main body 31 is positioned rearward relative to the rear end 22b of the rear wheel 22.

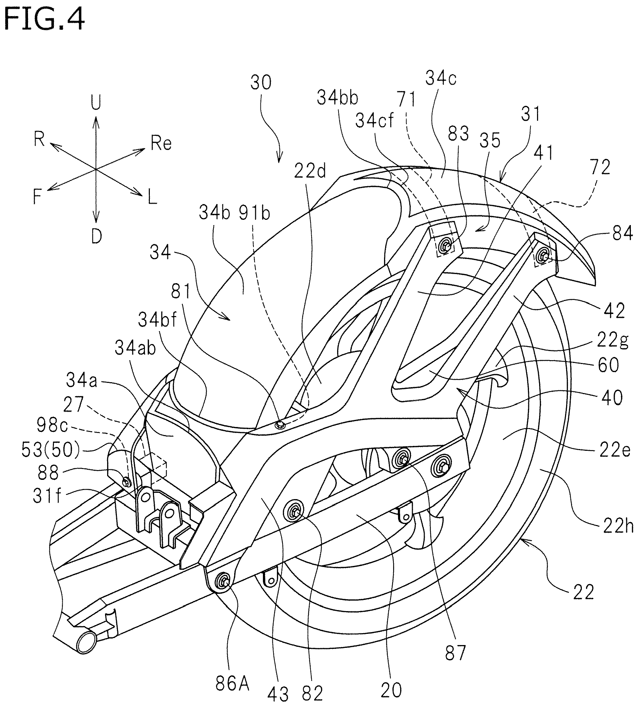

The position of the front end 31f of the fender main body 31 is, however, not particularly limited. The position of the front end 31f of the fender main body 31 with respect to the vehicle longitudinal direction may be identical to the position of the front end 22f of the rear wheel 22 with respect to the vehicle longitudinal direction. The front end 31f of the fender main body 31 may be positioned rearward relative to the front end 22f of the rear wheel 22. As illustrated in Fig. 4, the rear wheel 22 includes a hub 22d, a rim 22e, spokes 22g connecting the hub 22d and the rim 22e, and a tire 22h provided on the outside of the rim 22e. For example, the front end 31f of the fender main body 31 may be positioned rearward relative to the front end 22f of the tire 22h of the rear wheel 22 and frontward relative to the front end 22ef of the rim 22e (see Fig. 2), as viewed from one side of the motorcycle.

The position of the rear end 31 b of the fender main body 31 is not particularly limited either. The position of the rear end 31 b of the fender main body 31 with respect to the vehicle longitudinal direction may be identical to the position of the rear end 22b of the rear wheel 22 with respect to the vehicle longitudinal direction. The rear end 31 b of the fender main body 31 may be positioned frontward relative to the rear end 22b of the rear wheel 22. For example, the rear end 31 b of the fender main body 31 may be positioned frontward relative to the rear end 22b of the tire 22h of the rear wheel 22 and rearward relative to the rear end 22eb of the rim 22e (see Fig. 2), as viewed from one side of the motorcycle.

In the present preferred embodiment, the front end 31f of the fender main body 31 is in agreement with the lower end of a front portion of the fender main body 31, as illustrated in Fig. 2. The rear end 31b of the fender main body 31 is in agreement with the lower end of a rear portion of the fender main body 31. As viewed from one side of the motorcycle, angle θ formed by line L1 connecting the center 22c of the rear wheel 22 and the lower end 31f of the front portion of the fender main body 31 and line L2 connecting the center 22c of the rear wheel 22 and the lower end 31b of the rear portion of the fender main body 31 is 160 degrees. The angle θ is, however, not particularly limited thereto. The angle θ may be, for example, from 140 to 160 degrees, or from 120 to 140 degrees.

As illustrated in Fig. 4, the fender main body 31 has a circumferential wall 34 positioned radially outward of the rear wheel 22, a left wall 35 extending vertically and positioned to the left of the rear wheel 22, and a right wall 36 extending vertically and positioned to the right of the rear wheel 22. The circumferential wall 34 covers a portion of the radially outward portion of the rear wheel 22. The left wall 35 covers a portion of the left side of the rear wheel 22. The right wall 36 covers a portion of the right side of the rear wheel 22. The fender main body 31 is made of a single component. The circumferential wall 34, the left wall 35, and the right wall 36 are integrally formed with each other.

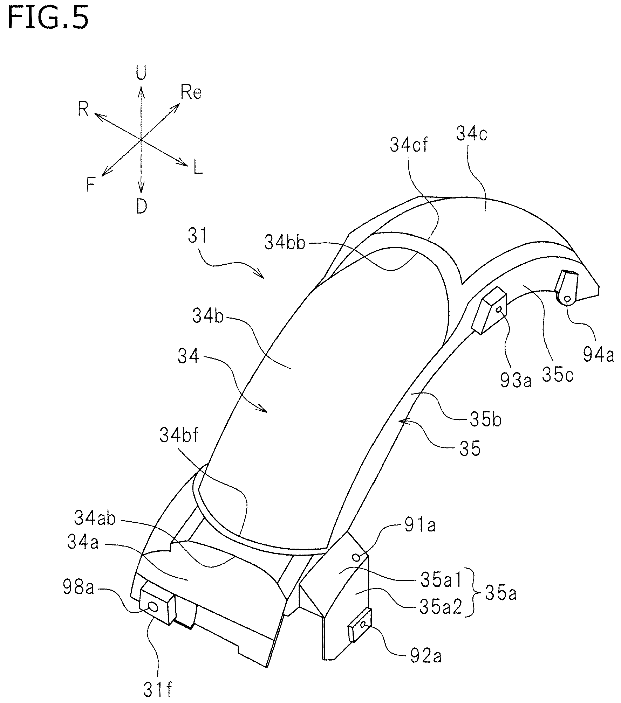

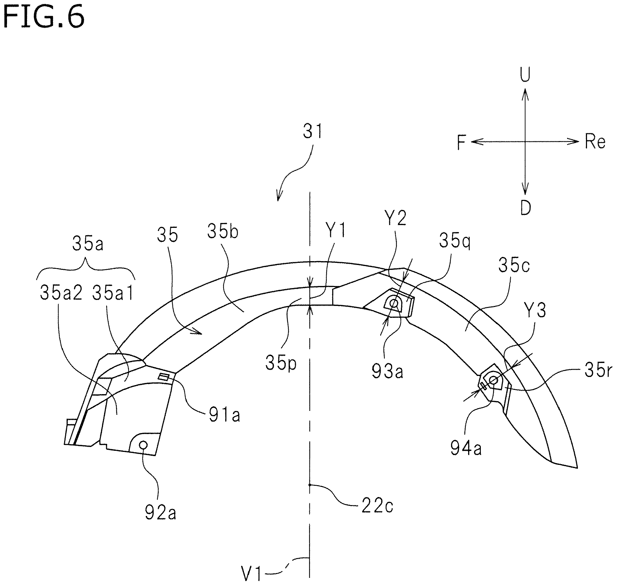

Fig. 5 is a perspective view of the rear fender 30. Fig. 6 is a left side view of the rear fender 30. As illustrated in Fig. 5, the circumferential wall 34 has a first circumferential wall 34a, a second circumferential wall 34b, and a third circumferential wall 34c. The second circumferential wall 34b is positioned at the rear of the first circumferential wall 34a. The third circumferential wall 34c is positioned at the rear of the second circumferential wall 34b. As illustrated in Fig. 2, the first circumferential wall 34a is disposed frontward relative to the center 22c of the rear wheel 22. The third circumferential wall 34c is disposed rearward relative to the center 22c of the rear wheel 22. However, a portion of the first circumferential wall 34a may be positioned rearward relative to the center 22c of the rear wheel 22. A portion of the third circumferential wall 34c may be positioned frontward relative to the center 22c of the rear wheel 22. At least a portion of the second circumferential wall 34b is disposed below the backstay 6A (see Fig. 1). As illustrated in Fig. 5, the second circumferential wall 34b is recessed relative to the first circumferential wall 34a and the third circumferential wall 34c. The second circumferential wall 34b is recessed radially inward of the rear wheel 22 relative to the first circumferential wall 34a and the third circumferential wall 34c. The second circumferential wall 34b is positioned radially inward of the rear wheel 22 relative to a rear portion 34ab of the first circumferential wall 34a. A rear portion 34bb of the second circumferential wall 34b is positioned radially inward of the rear wheel 22 relative to a front portion 34cf of the third circumferential wall 34c. A hole 98a is formed in a bottom right portion of the first circumferential wall 34a. The hole 98a is a through-hole that penetrates the first circumferential wall 34a in a front-rear direction.

As illustrated in Fig. 5, the left wall 35 comprises a first left wall 35a, a second left wall 35b, and a third left wall 35c. The first left wall 35a is provided to the left of the first circumferential wall 34a. The second left wall 35b is provided to the left of the second circumferential wall 34b. The third left wall 35c is provided to the left of the third circumferential wall 34c. The first left wall 35a has a lateral wall 35a1 extending leftward from the first circumferential wall 34a, and a vertical wall extending downward from the lateral wall 35a1. A hole 91 a is formed in the lateral wall 35a1. A hole 92a is formed in the vertical wall 35a2. As illustrated in Fig. 6, the third left wall 35c is positioned at the rear of the second left wall 35b. Holes 93a and 94a are formed in the third left wall 35c. The hole 94a is positioned rearward relative to the hole 93a. A portion of the left wall 35 that is positioned on a vertical line V1 through the center 22c of the rear wheel 22 as viewed from the left side of the motorcycle is defined as a first left wall portion 35p, a portion thereof around the hole 93a is defined as a second left wall portion 35q, and a portion thereof around the hole 94a is defined as a third left wall portion 35r. The dimension Y2 of the second left wall portion 35q along a radial direction of the rear wheel 22 (hereinafter, a dimension along a radial direction of the rear wheel 22 is simply referred to as "radial dimension" unless otherwise stated) is greater than the radial dimension Y1 of the first left wall portion 35p. Also, the radial dimension Y3 of the third left wall portion 35r is greater than the radial dimension Y1 of the first left wall portion 35p.

As illustrated in Fig. 3, the right wall 36 comprises a first right wall (not shown), a second right wall 36b, and a third right wall 36c. The second right wall 36b is provided to the right of the second circumferential wall 34b. The third right wall 36c is provided to the right of the third circumferential wall 34c. The second right wall 36b is formed in a symmetrical shape with the second left wall 35b. The third right wall 36c is formed in a symmetrical shape with the third left wall 35c. For these reasons, the second right wall 36b and the third right wall 36c will not be further elaborated on. A hole, which is not shown in the drawings, is formed in the first right wall. Holes 95a and 96a are formed in the third right wall 36c. A portion of the right wall 36 that is positioned on a vertical line V2 through the center 22c of the rear wheel 22 as viewed from the right side of the motorcycle is defined as a first right wall portion 36p, a portion thereof around the hole 95a is defined as a second right wall portion 36q, and a portion thereof around the hole 96a is defined as a third right wall portion 36r. The radial dimension Z2 of the second right wall portion 36q is greater than the radial dimension Z1 of the first right wall portion 36p. Also, the radial dimension Z3 of the third right wall portion 36r is greater than the radial dimension Z1 of the first right wall portion 36p.

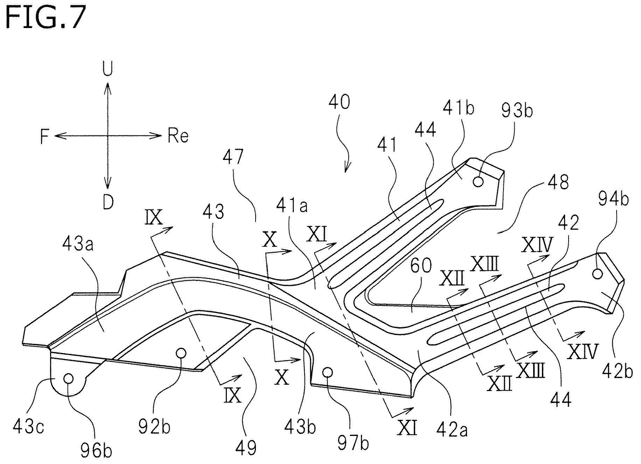

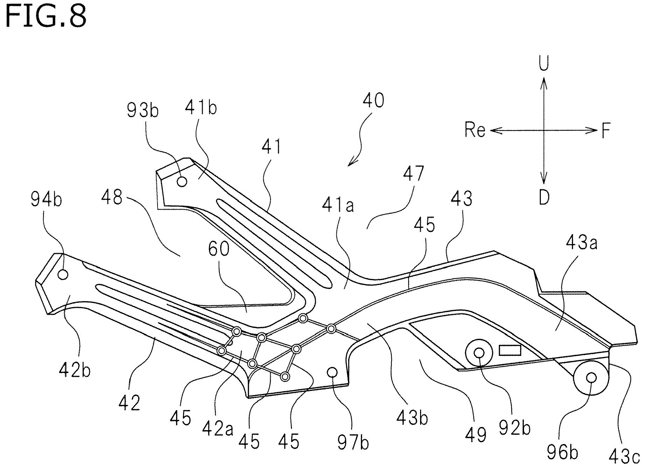

Next, the left side guard 40 will be detailed. Fig. 7 is a front view of the left side guard 40, in which the left side guard 40 is viewed from the left side of the motorcycle. Fig. 8 is a reverse side view of the left side guard 40, in which the left side guard 40 is viewed from the right side of the motorcycle. As illustrated in Fig. 7, the left side guard 40 comprises a left side guard body portion 43, a first left arm portion 41, and a second left arm portion 42. As illustrated in Fig. 2, the left side guard 40 is connected to the rear arm 20 and the fender main body 31. At least a portion of the left side guard body portion 43 is disposed above the rear arm 20, as viewed from the left side of the motorcycle. The first left arm portion 41 and the second left arm portion 42 extend from the left side guard body portion 43 toward the fender main body 31. The second left arm portion 42 is positioned at the rear of the first left arm portion 41. A chain cover 60 is integrally formed with the left side guard 40. The left side guard body portion 43, the first left arm portion 41, the second left arm portion 42, and the chain cover 60 are integrally formed with each other of plastic. The chain cover 60, however, is not always necessary and may be eliminated.

A first left opening 47 is defined by the fender main body 31, the left side guard body portion 43, and the first left arm portion 41, as viewed from the left side of the motorcycle. A second left opening 48 is defined by the fender main body 31, the first left arm portion 41, the chain cover 60, and the second left arm portion 42, as viewed from the left side of the motorcycle. When the chain cover 60 is not provided, the second left opening 48 may be defined by the fender main body 31, the first left arm portion 41, the left side guard body portion 43, and the second left arm portion 42. At least a portion of the second left opening 48 is defined by the fender main body 31, the first left arm portion 41, and the second left arm portion 42, as viewed from the left side of the motorcycle. A third left opening 49 is defined by the left side guard body portion 43 and the rear arm 20, as viewed from the left side of the motorcycle. All the first left opening 47, the second left opening 48, and the third left opening 49 are openings that penetrate the rear fender in a vehicle width direction. The term "vehicle width direction" herein means a lateral direction, i.e., a left-to-right/right-to-left direction.

As illustrated in Fig. 7, the left side guard body portion 43 is formed in an arch-like shape, as viewed from the left side of the motorcycle. The left side guard body portion 43 has a first inclined portion 43a that is inclined downward and forward, and a second inclined portion 43b that is inclined downward and rearward from the rear end of the first inclined portion 43a. A front portion of the first inclined portion 43a is provided with a mounting piece 43c protruding downward. A hole 96b is formed in the mounting piece 43c. A hole 92b is formed in a portion of the left side guard body portion 43 that is rearward relative to the hole 96b and frontward relative to the third left opening 49. A hole 97b is formed in a portion of the left side guard body portion 43 that is rearward relative to the third left opening 49. As illustrated in Fig. 4, a hole 91 b is formed in a portion of the left side guard body portion 43 that is above the hole 92b. The hole 96b, the hole 92b, and the hole 97b are through-holes that penetrate the left side guard body portion 43 in a vehicle width direction. The hole 91 b is a through-hole that penetrates the left side guard body portion 43 vertically.

As illustrated in Fig. 7, the first left arm portion 41 extends rearward and obliquely upward from the second inclined portion 43b. The first left arm portion 41 extends linearly as viewed from the left side of the motorcycle. However, the shape of the first left arm portion 41 is not particularly restricted. The first left arm portion 41 may extend in a curved shape as viewed from the left side of the motorcycle. The first left arm portion 41 may have an angularly bent shape as viewed from the left side of the motorcycle. A hole 93b is formed in a tip portion 41 b of the first left arm portion 41.

The second left arm portion 42 extends rearward and obliquely upward from a rear portion of the second inclined portion 43b. A root portion 42a of the second left arm portion 42 is positioned rearward relative to a root portion 41 a of the first left arm portion 41. A tip portion 42b of the second left arm portion 42 is positioned rearward relative to the tip portion 41 b of the first left arm portion 41. The second left arm portion 42 extends linearly as viewed from the left side of the motorcycle. However, the shape of the second left arm portion 42 is not particularly restricted. As viewed from the left side of the motorcycle, the second left arm portion 42 may extend in a curved shape, or may have an angularly bent shape. A hole 94b is formed in the tip portion 42b of the second left arm portion 42. The hole 94b of the second left arm portion 42 is positioned rearward relative to the hole 93b of the first left arm portion 41.

The chain cover 60 is continuous with the second inclined portion 43b of the left side guard body portion 43. The chain cover 60 is also continuous with the root portion 41a of the first left arm portion 41 and the root portion 42a of the second left arm portion 42.

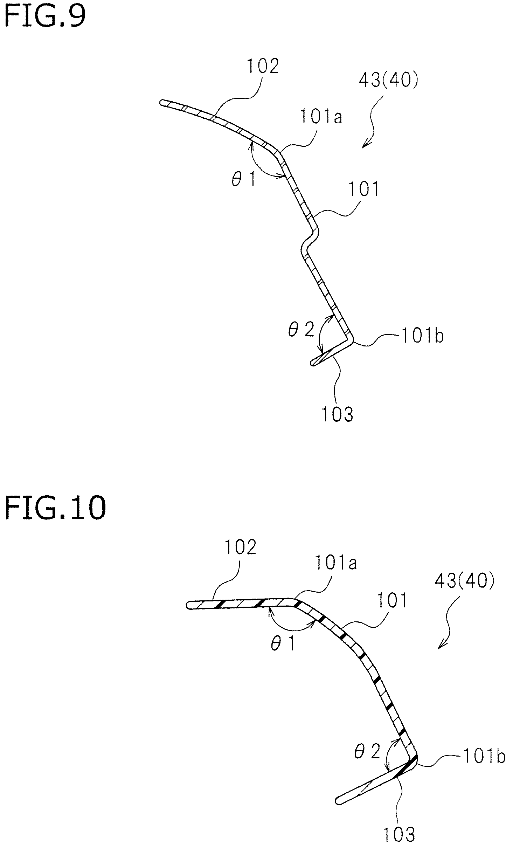

The left side guard 40 has a C-shaped cross-sectional shape. Fig. 9 is a cross-sectional view taken along line IX-IX in Fig. 7. Fig. 10 is a cross-sectional view taken along line X-X in Fig. 7. As illustrated in Figs. 9 and 10, the left side guard body portion 43 has a C-shaped cross-sectional shape. The cross-sectional shape shown in Fig. 9 comprises a first cross-section portion 101, a second cross-section portion 102 that is angularly bent or curved from one end 101 a of the first cross-section portion 101, and a third cross-section portion 103 that is angularly bent or curved from the other end 101 b of the first cross-section portion 101. The angle formed by the first cross-section portion 101 and the second cross-section portion 102 is defined as angle θ1, and the angle formed by the first cross-section portion 101 and the third cross-section portion 103 is defined as angle θ2. The angle θ1 is from 30 degrees to 150 degrees, and the angle θ2 is also from 30 degrees to 150 degrees. In the present specification, the term "C-shaped cross-sectional shape" is intended to mean such a cross-sectional shape. Each of the angles θ1 and θ2 may be from 45 to 135 degrees, or may be from 60 to 120 degrees.

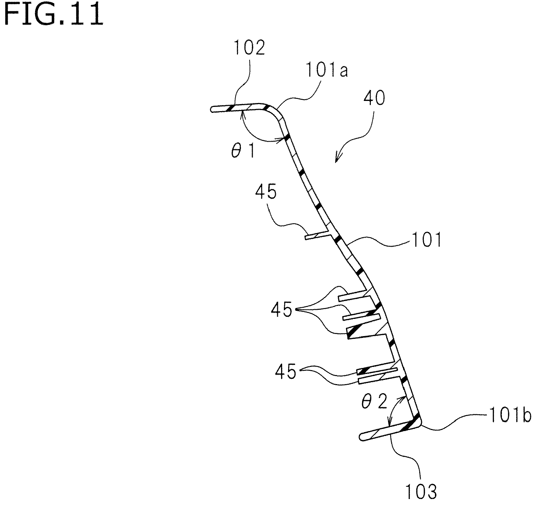

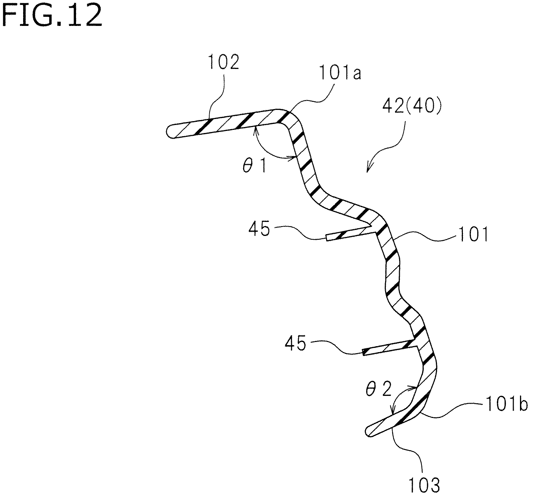

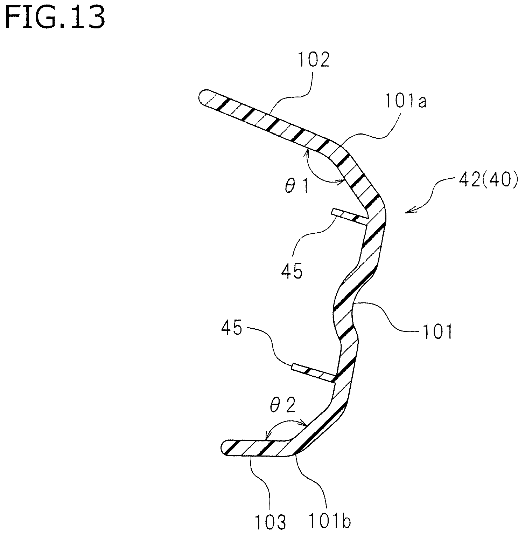

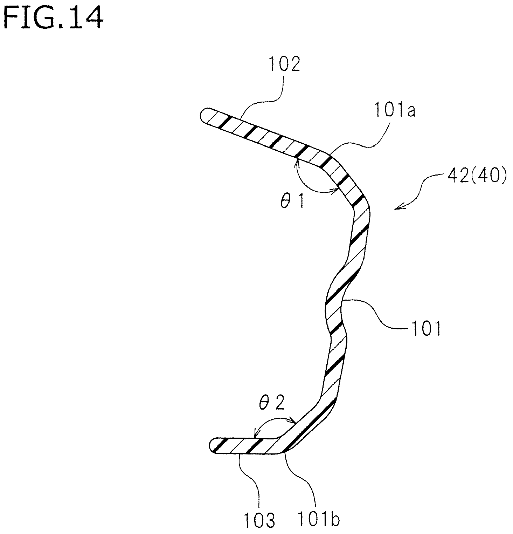

Fig. 11 is a cross-sectional view taken along line XI-XI of Fig. 7. The cross-sectional shape of the left side guard 40 shown in Fig. 11 is also formed in a C-shape. Fig. 12 is a cross-sectional view taken along line XII-XII of Fig. 7. Fig. 13 is a cross-sectional view taken along line XIII-XIII of Fig. 7. Fig. 14 is a cross-sectional view taken along line XIV-XIV of Fig. 7. As illustrated in Figs. 12, 13, and 14, the second left arm portion 42 has a C-shaped cross-sectional shape. Like the second left arm portion 42, the first left arm portion 41 also has a C-shaped cross-sectional shape. Because each of the left side guard body portion 43, the first left arm portion 41, and the second left arm portion 42 has a C-shaped cross-sectional shape, the rigidity of each of them is increased. Thus, the left side guard 40 is ensured to have sufficient rigidity.

As illustrated in Fig. 7, each of the first left arm portion 41 and the second left arm portion 42 has a rib 44 protruding leftward. The rib 44 protrudes from the obverse side of each of the first left arm portion 41 and the second left arm portion 42. The rib 44 further improves the rigidity of each of the first left arm portion 41 and the second left arm portion 42. The rib 44 is, however, not always necessary and may be eliminated. As illustrated in Fig. 8, the left side guard 40 has a rib 45 protruding rightward. The rib 45 protrudes from the reverse side of the left side guard 40. The rib 45 serves to further improve the rigidity of the left side guard 40. The rib 45 is, however, not always necessary and may be eliminated.

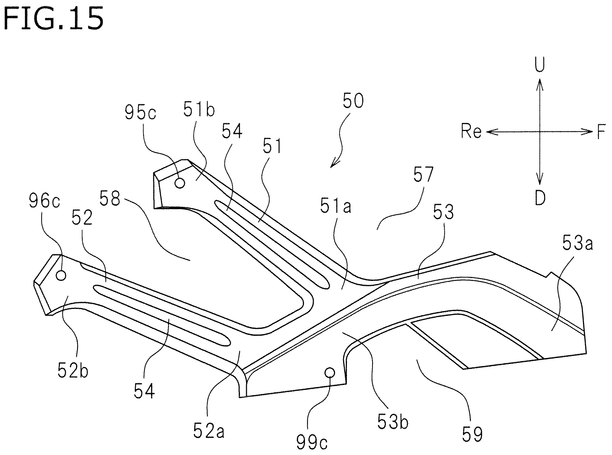

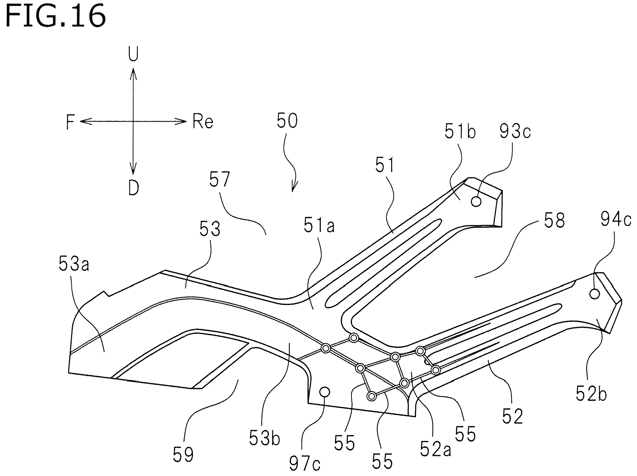

Next, the right side guard 50 will be detailed. As illustrated in Fig. 3, the right side guard 50 is connected to the rear arm 20 and the fender main body 31. Fig. 15 is a front view of the right side guard 50, in which the right side guard 50 is viewed from the right side of the motorcycle. Fig. 16 is a reverse side view of the right side guard 50, in which the right side guard 50 is viewed from the left side of the motorcycle. As illustrated in Fig. 15, the right side guard 50 comprises a right side guard body portion 53, a first right arm portion 51, and a second right arm portion 52. The right side guard 50 has substantially a symmetrical shape with the left side guard 40. The shape of the right side guard 50 and that of the left side guard 40, however, may not be symmetrical with each other. Unlike the left side guard 40, the chain cover 60 is not provided for the right side guard 50. As illustrated in Fig. 3, at least a portion of the right side guard body portion 53 is disposed above the rear arm 20, as viewed from the right side of the motorcycle. The first right arm portion 51 and the second right arm portion 52 extend from the right side guard body portion 53 toward the fender main body 31. The second right arm portion 52 is positioned at the rear of the first right arm portion 51. The right side guard body portion 53, the first right arm portion 51, and the second right arm portion 52 are integrally formed with each other of plastic.

A first right opening 57 is defined by the fender main body 31, the right side guard body portion 53, and the first right arm portion 51, as viewed from the right side of the motorcycle. A second right opening 58 is defined by the fender main body 31, the first right arm portion 51, the right side guard body portion 53, and the second right arm portion 52, as viewed from the right side of the motorcycle. At least a portion of the second right opening 58 is defined by the fender main body 31, the first right arm portion 51, and the second right arm portion 52, as viewed from the right side of the motorcycle. A third right opening 59 is defined by the right side guard body portion 53 and the rear arm 20, as viewed from the right side of the motorcycle. All the first right opening 57, the second right opening 58, and the third right opening 59 are openings that penetrate the rear fender in a vehicle width direction.

As illustrated in Fig. 15, the right side guard body portion 53 has substantially a symmetrical shape with the left side guard body portion 43. The shape of the right side guard body portion 53, however, may not be symmetrical with the shape of the left side guard body portion 43. The right side guard body portion 53 is formed in an arch-like shape, as viewed from the right side of the motorcycle. The right side guard body portion 53 has a first inclined portion 53a that is inclined downward and forward, and a second inclined portion 53b that is inclined downward and rearward from the rear end of the first inclined portion 53a. In the right side guard body portion 53, the mounting piece 43c (see Fig. 7) is not provided for a front portion of the first inclined portion 53a. The right side guard body portion 53 has no hole that corresponds to the hole 96b (see Fig.7) of the left side guard body portion 43. A hole 98c (see Fig. 4) is formed in a front wall of the right side guard body portion 53. The hole 98c is a through-hole that penetrates the right side guard body portion 53 in a front-rear direction. The right side guard body portion 53 has no hole that corresponds to the hole 92b of the left side guard body portion 43. The right side guard body portion 53 has a hole 99c that corresponds to the hole 97b of the left side guard body portion 43. The hole 99c is a through-hole that penetrates the right side guard body portion 53 laterally, i.e., in a left-to-right/right-to-left direction.

The first right arm portion 51 has a symmetrical shape with the first left arm portion 41. The shape of the first right arm portion 51, however, may not be symmetrical with the shape of the first left arm portion 41. The first right arm portion 51 extends rearward and obliquely upward from the second inclined portion 53b. The first right arm portion 51 extends linearly as viewed from the right side of the motorcycle. However, the shape of the first right arm portion 51 is not particularly restricted. As viewed from the right side of the motorcycle, the first right arm portion 51 may extend in a curved shape, or may have an angularly bent shape. A hole 95c is formed in a tip portion 51 b of the first right arm portion 51.

The second right arm portion 52 extends rearward and obliquely upward from a rear portion of the second inclined portion 53b. A root portion 52a of the second right arm portion 52 is positioned rearward relative to a root portion 51 a of the first right arm portion 51. A tip portion 52b of the second right arm portion 52 is positioned rearward relative to the tip portion 51 b of the first right arm portion 51. The second right arm portion 52 extends linearly as viewed from the right side of the motorcycle. However, the shape of the second right arm portion 52 is not particularly restricted. As viewed from the right side of the motorcycle, the second right arm portion 52 may extend in a curved shape, or may have an angularly bent shape. A hole 96c is formed in the tip portion 52b of the second right arm portion 52. The hole 96c of the second right arm portion 52 is positioned rearward relative to the hole 95c of the first right arm portion 51.

Like the left side guard 40, the right side guard 50 has a C-shaped cross-sectional shape. As described above, the right side guard 50 has substantially a symmetrical shape with the left side guard 40. The respective cross-section portions of the right side guard 50 that correspond to the above-described cross-section portions of the left side guard 40 are formed into a C-shape. The right side guard body portion 53 has a C-shaped cross-sectional shape. The first right arm portion 51 and the second right arm portion 52 also have a C-shaped cross-sectional shape. Because each of the right side guard body portion 53, the first right arm portion 51, and the second right arm portion 52 has a C-shaped cross-sectional shape, the rigidity of each of them is increased. Thus, the right side guard 50 is ensured to have sufficient rigidity.

As illustrated in Fig. 15, each of the first right arm portion 51 and the second right arm portion 52 has a rib 54 protruding rightward. The rib 54 protrudes from the obverse side of each of the first right arm portion 51 and the second right arm portion 52. The rib 54 further improves the rigidity of each of the first right arm portion 51 and the second right arm portion 52. The rib 54 is, however, not always necessary and may be eliminated. As illustrated in Fig. 16, the right side guard 50 has a rib 55 protruding leftward. The rib 55 protrudes from the reverse side of the right side guard 50. The rib 55 serves to further improve the rigidity of the right side guard 50. The rib 55 is, however, not always necessary and may be eliminated.

In the present preferred embodiment, another side guard 65 is disposed below the rear arm 20 and to the left of the rear wheel 20, as illustrated in Fig. 2. A fourth left opening 66 is defined by the side guard 65 and the rear arm 20. The side guard 65 is, however, not always necessary and may be eliminated. Note that the side guard 65 is not depicted in Fig. 4.

As described earlier, the rear fender 30 is formed by assembling the fender main body 31, the left side guard 40, and the right side guard 50 together. The rear fender 30 is mounted to the rear arm 20. Next, the description discusses the way in which the left side guard 40 is mounted to the rear arm 20 and the fender main body 31 and the way in which the right side guard 50 is mounted to the rear arm 20 and the fender main body 31.

As illustrated in Fig. 4, the left side guard body portion 43 of the left side guard 40 is secured to the rear arm 20 by a bolt 86A. More specifically, the mounting piece 43c (see Fig. 7) is overlapped with the rear arm 20, and the bolt 86A is inserted through the hole 96b of the mounting piece 43c and a hole (not shown) of the rear arm 20. Thus, the left side guard body portion 43 and the rear arm 20 are connected by the bolt 86A. However, the left side guard body portion 43 and the rear arm 20 may not necessarily be connected by the bolt 86A, but may be connected to each other by other connecting techniques. The same applies to later-described parts that are connected by bolts, and they may be connected to each other by means other than bolts. As illustrated in Fig. 2, the left side guard body portion 43 is secured to the rear arm 20 at a position frontward relative to the front end 22f of the rear wheel 22.

The left side guard body portion 43 of the left side guard 40 is connected to the fender main body 31 at a position frontward relative to the center 22c of the rear wheel 22. As illustrated in Fig. 4, the left side guard body portion 43 is connected to the fender main body 31 by a bolt 81. More specifically, a portion of the left side guard body portion 43 and the lateral wall 35a1 (see Fig. 5) of the fender main body 31 are overlapped with each other, and the bolt 81 is inserted through the hole 91 b of the left side guard body portion 43 and the hole 91 a of the fender main body 31. Thus, the left side guard body portion 43 and the fender main body 31 are secured to each other by the bolt 81.

As illustrated in Fig. 2, a bracket 24 protruding upward and disposed to the left of the rear wheel 22 is provided on the rear arm 20. The bracket 24 has a hole (not shown) formed therein. The bracket 24, the vertical wall 35a2 (see Fig. 5), and another portion of the left side guard body portion 43 are overlapped with each other, and a bolt 82 is inserted through the hole of the bracket 24, the hole 92a of the fender main body 31, and the hole 92b of the left side guard body portion 43. The left side guard body portion 43, the fender main body 31, and the rear arm 20 are secured to each other by the bolt 82.

Also as illustrated in Fig. 2, another bracket 25 protruding upward and disposed to the left of the rear wheel 22 is provided on the rear arm 20. The bracket 25 is disposed to the rear of the bracket 24. The bracket 25 has a hole (not shown) formed therein. The bracket 25 and another portion of the left side guard body portion 43 are overlapped with each other, and a bolt 87 is inserted through the hole of the bracket 25 and the hole 97b (see Fig. 7) of the left side guard body portion 43. The left side guard body portion 43 and the rear arm 20 are secured to each other by the bolt 87.

The first left arm portion 41 is connected to the fender main body 31 at a position rearward relative to the center 22c of the rear wheel 22. The first left arm portion 41 is secured to the fender main body 31 by a bolt 83. More specifically, the tip portion 41 b of the first left arm portion 41 and the third left wall 35c of the fender main body 31 are overlapped with each other, and the bolt 83 is inserted through the hole 93b (see Fig. 7) of the first left arm portion 41 and the hole 93a (see Fig. 6) of the fender main body 31. The first left arm portion 41 and the fender main body 31 are secured to each other by the bolt 83. As described earlier, the hole 93a is formed in the second left wall portion 35q (see Fig. 6). The first left arm portion 41 is mounted to the second left wall portion 35q of the fender main body 31.

The second left arm portion 42 is connected to the fender main body 31 at a position rearward relative to the center 22c of the rear wheel 22. The second left arm portion 42 is secured to the fender main body 31 by a bolt 84. More specifically, the tip portion 42b of the second left arm portion 42 and the third left wall 35c of the fender main body 31 are overlapped with each other, and the bolt 84 is inserted through the hole 94b (see Fig. 7) of the second left arm portion 42 and the hole 94a (see Fig. 6) of the fender main body 31. The second left arm portion 42 and the fender main body 31 are secured to each other by the bolt 84. The hole 94a is formed in the third left wall portion 35r (see Fig. 6). The second left arm portion 42 is mounted to the third left wall portion 35r of the fender main body 31.

As illustrated in Fig. 4, another bracket 26 protruding upward and disposed to the right of the rear wheel 22 is provided on the rear arm 20. In the bracket 26, a hole (not shown) opening forward is formed therein. The bracket 26, the first circumferential wall 34a of the fender main body 31, and a front wall of the right side guard body portion 53 are overlapped with each other, and a bolt 88 is inserted through the hole of the bracket 26, the hole 98a (see Fig. 5) of the fender main body 31, and the hole 98c of the right side guard body portion 53. The right side guard body portion 53, the fender main body 31, and the rear arm 20 are secured to each other by the bolt 88.

As illustrated in Fig. 3, another bracket 27 protruding upward and disposed to the right of the rear wheel 22 is provided on the rear arm 20. The bracket 27 is disposed to the rear of the bracket 26. The bracket 27 has a hole (not shown) formed therein. The bracket 27 and another portion of the right side guard body portion 53 are overlapped with each other, and a bolt 89 is inserted through the hole of the bracket 27 and the hole 99c (see Fig. 15) of the right side guard body portion 53. The right side guard body portion 53 and the rear arm 20 are secured to each other by the bolt 89.

The first right arm portion 51 is connected to the fender main body 31 at a position rearward relative to the center 22c of the rear wheel 22. The tip portion 51 b of the first right arm portion 51 and the third right wall 36c of the fender main body 31 are overlapped with each other, and a bolt 85 is inserted through the hole 95c (see Fig. 15) of the first right arm portion 51 and the hole 95a of the fender main body 31. The first right arm portion 51 and the fender main body 31 are secured to each other by the bolt 85. As described earlier, the hole 95a is formed in the second right wall portion 36q. The first right arm portion 51 is mounted to the second right wall portion 36q of the fender main body 31.

The second right arm portion 52 is connected to the fender main body 31 at a position rearward relative to the center 22c of the rear wheel 22. The tip portion 52b of the second right arm portion 52 and the third right wall 36c of the fender main body 31 are overlapped with each other, and a bolt 86 is inserted through the hole 96c (see Fig. 15) of the second right arm portion 52 and the hole 96a of the fender main body 31. The second right arm portion 52 and the fender main body 31 are secured to each other by the bolt 86. The hole 96a is formed in the third right wall portion 36r. The second right arm portion 52 is mounted to the third right wall portion 36r of the fender main body 31.

As described above, the left side guard 40 is secured to the rear arm 20 by the bolts 86A, 82, and 87. The left side guard 40 is secured to the fender main body 31 by the bolts 81, 82, 83, and 84. The right side guard 50 is secured to the rear arm 20 by the bolts 88 and 89. The right side guard 50 is secured to the fender main body 31 by the bolts 88, 85, and 86.

In the present preferred embodiment, a first stay 71 and a second stay 72, which are made of metal, are provided on the reverse side of the third circumferential wall 34c of the fender main body 31, as illustrated in Fig. 4. The first stay 71 and the second stay 72 are members that are formed in a strip shape, and they extend laterally along the back face of the third circumferential wall 34c. The left end portion of the first stay 71 is secured to the left wall 35 (more specifically, the third left wall 35c) of the fender main body 31 by the bolt 83. The right end portion of the first stay 71 is secured to the right wall 36 (more specifically, the third right wall 36c) of the fender main body 31 by the bolt 85 (see Fig. 3). The left end portion of the second stay 72 is secured to the left wall 35 (more specifically, the third left wall 35c) of the fender main body 31 by the bolt 84. The right end portion of the second stay 72 is secured to the right wall 36 (more specifically, the third right wall 36c) of the fender main body 31 by the bolt 86. The first stay 71 and the second stay 72 are reinforcing members for increasing the rigidity of the rear fender 30. The first stay 71 and the second stay 72 make it possible to further increase the rigidity of the rear fender 30 while preventing the weight of the rear fender 30 from increasing. The first stay 71 and the second stay 72, however, are not always necessary and may be eliminated.

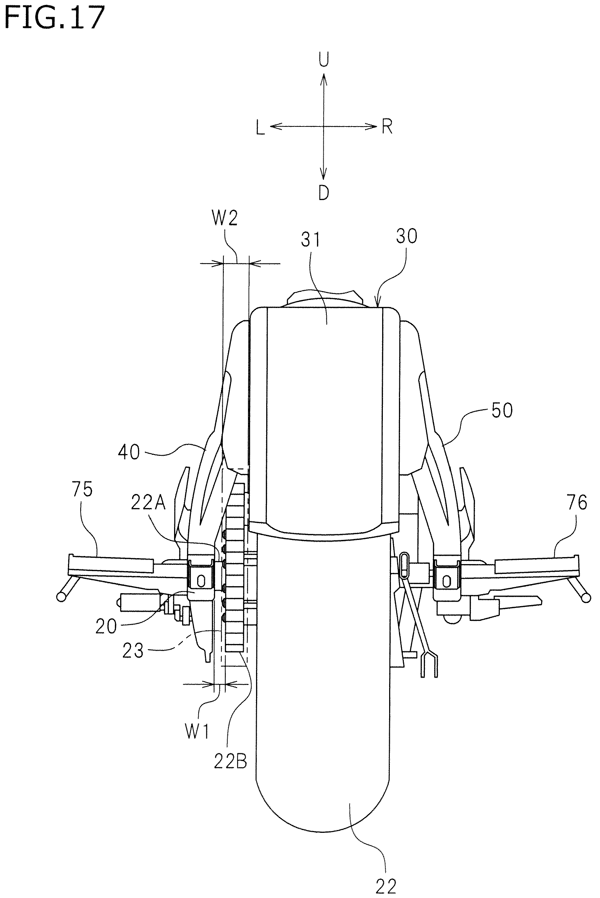

As illustrated in Fig. 17, the left side guard 40 is disposed to the left of the chain 23. The chain 23 is disposed between the rear wheel 22 and the left side guard 40. The sprocket 22B is disposed between the rear wheel 22 and the left side guard 40. A gap W1 between the left side guard 40 and the second sprocket 22B along a vehicle width direction is smaller than a width W2 of the chaim 23. The term "width of the chain 23" herein means the dimension of the chain 23 along the vehicle width direction. In Fig. 17, reference numeral 75 represents a left footstep, and reference numeral 76 represents a right footstep.

As illustrated in Fig. 1, the left side guard 40 and a portion of the chain 23 are overlapped with each other, as viewed from the left side of the motorcycle. The left side guard 40 covers a portion of the chain 23. The chain cover 60 is overlapped with a portion of the chain 23, as viewed from the left side of the motorcycle. The chain cover 60 covers a portion of the chain 23.

As described above, in the motorcycle 1, the rear fender 30 has the left and right side guards 40 and 50 in addition to the fender main body 31. The left side guard 40 prevents mud from splashing leftward from the rear wheel 22. The right side guard 50 prevents mud from splashing rightward from the rear wheel 22. As a result, the mud guarding performance of the rear fender 30 can be enhanced.

The rear fender 30 has the first left opening 47 and the first right opening 57 formed therein. The left and right side guards 40 and 50 are not formed in a flat plate shape. The left and right side guards 40 and 50 are unlikely to bend easily. For this reason, the left and right side guards 40 and 50 are unlikely to cause vibrations. Thus, the present preferred embodiment can suppress the noise resulting from the left and right side guards 40 and 50.

The rear fender 30 can be made lighter in weight because each of the fender main body 31, the left side guard 40, and the right side guard 50 is formed of plastic. Moreover, the rear fender 30 has the first left opening 47 and the first right opening 57 formed therein. Therefore, the rear fender 30 can be made lighter in weight. As a result, the unsprung weight can be reduced. The riding comfort of the motorcycle 1 can be improved.

As illustrated in Fig. 2, the left side guard 40 comprises the left side guard body portion 43 at least a portion of which being positioned above the rear arm 20 as viewed from the left side of the motorcycle, and the first left arm portion 41 extending from the left side guard body portion 43 to the fender main body 31. The left side guard body portion 43 is connected to the fender main body 31 at a position frontward relative to the center 22c of the rear wheel 22, and the first left arm portion 41 is connected to the fender main body 31 at a position rearward relative to the center 22c of the rear wheel 22. Likewise, as illustrated in Fig. 3, the right side guard 50 comprises the right side guard body portion 53 at least a portion of which being positioned above the rear arm 20 as viewed from the right side of the motorcycle, and the first right arm portion 51 extending from the right side guard body portion 53 to the fender main body 31. The right side guard body portion 53 is connected to the fender main body 31 at a position frontward relative to the center 22c of the rear wheel 22, and the first right arm portion 51 is connected to the fender main body 31 at a position rearward relative to the center 22c of the rear wheel 22. Such a configuration makes it possible to provide the rear fender 30 with sufficient rigidity, although the fender main body 31, the left side guard 40, and the right side guard 50 are formed of plastic and moreover the rear fender 30 has the first left opening 47 and the first right opening 57. In addition, the fender main body 31, the left side guard 40, and the right side guard 50 are separate parts, and it is unnecessary to form these parts integrally with each other. Thus, the fender main body 31, the left side guard 40, and the right side guard 50 with the above-described configuration can be manufactured easily. By assembling these parts together, the rear fender 30 with the above-described configuration can be manufactured easily.

Therefore, the motorcycle 1 according to the present preferred embodiment can improve the mud guarding performance of the rear fender 30 that is swingable together with the rear arm 20 and the rear wheel 22, provide the rear fender 30 with sufficient rigidity, and moreover reduce the unsprung weight.

In the motorcycle 1 according to the present preferred embodiment, the chain cover 60 disposed to the left of a portion of the chain 23 is provided, and the chain cover 60 is integrated with the left side guard 40. If the chain cover 60 and the left side guard 40 are separate parts, a securing part for securing these parts is necessary. In the present preferred embodiment, such a securing part is unnecessary. Therefore, the overall size of the chain cover 60 and the rear fender 30 can be reduced. In addition, the parts count can be reduced.

As illustrated in Fig. 17, the gap W1 between the left side guard 40 and the second sprocket 22B along a vehicle width direction is smaller than the width W2 of the chain 23. The chain 23 does not get into the gap between the left side guard 40 and the second sprocket 22B even if the chain 23 comes off the second sprocket 22B. Therefore, the chain 23 is prevented from making contact with the axle shaft 22A.

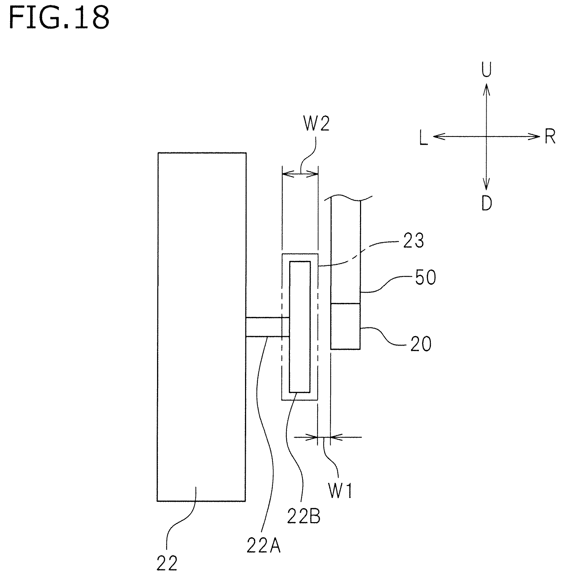

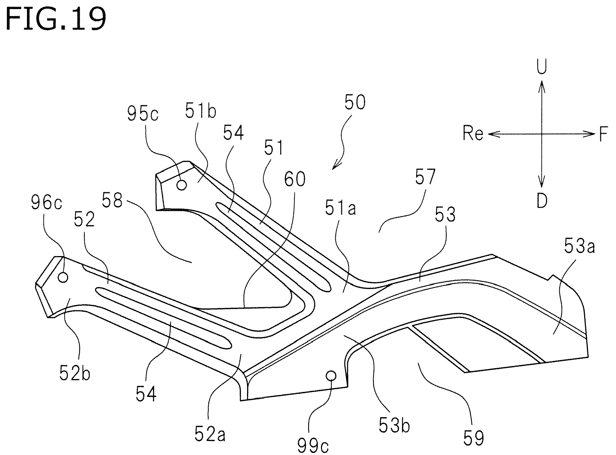

In the motorcycle 1 according to the present preferred embodiment, the chain 23 is disposed to the left of the rear wheel 22, but it is also possible to dispose the chain 23 to the right of the rear wheel 22. More specifically, in the motorcycle 1 according to the present preferred embodiment, the output shaft 19 of the power unit 16 extends leftward from the crankcase 16A, and the first sprocket 19A is disposed to the left of the power unit 16. The second sprocket 22B is disposed to the left of the rear wheel 22. The chain 23 is disposed to the left of the rear wheel 22. However, the output shaft 19 of the power unit 16 may extend rightward from the crankcase 16A, and the first sprocket 19A may be disposed to the right of the power unit 16. As schematically shown in Fig. 18, the second sprocket 22B may be disposed to the right of the rear wheel 22, and the chain 23 may be disposed to the right of the rear wheel 22. In this case, it is possible to dispose the chain cover 60 to the right of the rear wheel 22. As illustrated in Fig. 19, the chain cover 60 may be integrated with the right side guard 50. For example, the right side guard 50 may have a symmetrical shape with the left side guard 40 according to the present preferred embodiment. The overall size of the chain cover 60 and the rear fender 30 can be made small when the chain cover 60 is integrated with the right side guard 50. In addition, the parts count can be reduced.

As illustrated in Fig. 18, when the chain 23 is disposed to the right of the rear wheel 22, the gap W1 between the right side guard 50 and the second sprocket 22B along a vehicle width direction may be smaller than the width W2 of the chain 23. Thereby, the chain 23 can be prevented from getting into the gap between the right side guard 50 and the second sprocket 22B even if the chain 23 comes off the second sprocket 22B. Therefore, the chain 23 can be prevented from making contact with the axle shaft 22A.

Although the size of the fender main body 31 along the vehicle longitudinal direction is not particularly restricted, the front end 31f of the fender main body 31 is positioned frontward relative to the front end 22f of the rear wheel 22 and the rear end 31 b of the fender main body 31 is positioned rearward relative to the rear end 22b of the rear wheel 22 in the present preferred embodiment. The mud guarding performance of the rear fender 30 can be further enhanced because the size of the fender main body 31 along the vehicle longitudinal direction is very large. Since the fender main body 31 is formed of plastic, the weight of the fender main body 31 is kept low although the size of the fender main body 31 along the vehicle longitudinal direction is large. As a result, the unsprung weight can be reduced. Moreover, since the left and right side guards 40 and 50 support the fender main body 31, the fender main body 31 is prevented from bending although the size of the fender main body 31 along the vehicle longitudinal direction is large. As a result, it is possible to provide the rear fender 30 with sufficient rigidity.

In the present preferred embodiment, the left side guard body portion 43 of the left side guard 40 and/or the right side guard body portion 53 of the right side guard 50 may have a C-shaped cross-sectional shape. Therefore, the rigidity of the left side guard body portion 43 and/or the right side guard body portion 53 can be increased. Since the left side guard 40 and the right side guard 50 are separate parts from the fender main body 31, the left side guard body portion 43 and/or the right side guard body portion 53 having a C-shaped cross-sectional shape can be manufactured easily.

In the present preferred embodiment, the first left arm portion 41 and/or the first right arm portion 51 may have a C-shaped cross-sectional shape. Therefore, the rigidity of the first left arm portion 41 and/or the first right arm portion 51 can be increased. Since the left side guard 40 and the right side guard 50 are separate parts from the fender main body 31, the first left arm portion 41 and/or the first right arm portion 51 having a C-shaped cross-sectional shape can be manufactured easily.

In the present preferred embodiment, as illustrated in Fig. 2, the left side guard 40 has the second left arm portion 42 in addition to the first left arm portion 41. The left side guard body portion 43 is connected to the fender main body 31 by the first left arm portion 41 and the second left arm portion 42. As a result, the rigidity of the rear fender 30 can be further increased. The second left arm portion 42 makes it possible to further prevent mud from splashing leftward from the rear wheel 22. At least a portion of the second left opening 48 is defined by the fender main body 31, the first left arm portion 41, and the second left arm portion 42, as viewed from the left side of the motorcycle. Because the second left opening 48 is formed between the first left arm portion 41 and the second left arm portion 42, the noise resulting from the left side guard 40 can be suppressed more effectively. In addition, the unsprung weight can be reduced.

The second left arm portion 42 has a C-shaped cross-sectional shape. Therefore, the rigidity of the second left arm portion 42 can be increased. Since the left side guard 40 is a separate part from the fender main body 31 and the right side guard 50, the second left arm portion 42 having a C-shaped cross-sectional shape can be manufactured easily.

In the present preferred embodiment, as illustrated in Fig. 3, the right side guard 50 has the second right arm portion 52 in addition to the first right arm portion 51. The right side guard body portion 53 is connected to the fender main body 31 by the first right arm portion 51 and the second right arm portion 52. As a result, the rigidity of the rear fender 30 can be further increased. The second right arm portion 52 makes it possible to further prevent mud from splashing rightward from the rear wheel 22. At least a portion of the second right opening 58 is defined by the fender main body 31, the first right arm portion 51, and the second right arm portion 52, as viewed from the right side of the motorcycle. Because the second right opening 58 is formed between the first right arm portion 51 and the second right arm portion 52, the noise resulting from the right side guard 50 can be suppressed more effectively. In addition, the unsprung weight can be reduced.

The second right arm portion 52 has a C-shaped cross-sectional shape. Therefore, the rigidity of the second right arm portion 52 can be increased. Since the right side guard 50 is a separate part from the fender main body 31 and the left side guard 40, the second right arm portion 52 having a C-shaped cross-sectional shape can be manufactured easily.

It should be noted that the cross-sectional shapes of the left side guard body portion 43, the first left arm portion 41, the second left arm portion 42, the right side guard body portion 53, the first right arm portion 51, and the second right arm portion 52 are not restricted to a C-shape. It is possible to employ, for example, other cross-sectional shapes that can increase the rigidity for the cross-sectional shapes of these parts. For example, it is possible to employ a H-shaped cross-sectional shape in place of the C-shaped cross-sectional shape.

In the present preferred embodiment, the third left opening 49 may be defined by the left side guard body portion 43 and the rear arm 20, as viewed from the left side of the motorcycle, as illustrated in Fig. 2. This makes it possible to further suppress the noise resulting from the left side guard 40. In addition, the unsprung weight can be reduced.

Also, as illustrated in Fig. 3, the third right opening 59 may be defined by the right side guard body portion 53 and the rear arm 20, as viewed from the right side of the motorcycle. This makes it possible to further suppress the noise resulting from the right side guard 50. In addition, the unsprung weight can be reduced.

In the present preferred embodiment, the first left arm portion 41 may be mounted to the second left wall portion 35q (see Fig. 6) of the left wall 35 of the fender main body 31. The dimension Y2 of the second left wall portion 35q along a radial direction of the rear wheel 22 is greater than the radial dimension Y1 of the first left wall portion 35p positioned on the vertical line V1 through the center 22c of the rear wheel 22, as viewed from the left side of the motorcycle. The first left arm portion 41 is mounted to a portion of the left wall 35 of the fender main body 31 that has a greater radial dimension. Therefore, the first left arm portion 41 and the fender main body 31 can be firmly secured to each other. As illustrated in Fig. 3, the first right arm portion 51 is mounted to the second right wall portion 36q of the right wall 36 of the fender main body 31. The radial dimension Z2 of the second right wall portion 36q is greater than the radial dimension Z1 of the first right wall portion 36p, which is positioned on the vertical line V2 through the center 22c of the rear wheel 22, as viewed from the right side of the motorcycle. The first right arm portion 51 is mounted to a portion of the right wall 36 of the fender main body 31 that has a greater radial dimension. Therefore, the first right arm portion 51 and the fender main body 31 can be firmly secured to each other. With the present preferred embodiment, the rigidity of the rear fender 30 can be increased.

As illustrated in Fig. 5, the fender main body 31 of the rear fender 30 has the first circumferential wall 34a, the second circumferential wall 34b, and the third circumferential wall 34c. As illustrated in Fig. 2, at least a portion of the second circumferential wall 34b is disposed below the backstay 6A, and the second circumferential wall 34b is recessed radially inward of the rear wheel 22 relative to the first circumferential wall 34a and the third circumferential wall 34c. Thus, a large gap is provided between the backstay 6A and the second circumferential wall 34b of the fender main body 31. Since the rear fender 30 is swingable together with the rear arm 20, there may be a case that the rear fender 30 moves upward together with the rear arm 20 when, for example, the motorcycle 1 goes over a bump while traveling. The rear fender 30 can be more reliably prevented from coming into contact with the backstay 6A in such a case.

### REFERENCE SIGNS LIST

- 1: Motorcycle
- 2: Body frame
- 15: Seat
- 20: Rear arm
- 22: Rear wheel
- 30: Rear fender
- 31: Fender main body
- 40: Left side guard
- 50: Right side guard

## Claims

1. A motorcycle comprising:
a body frame (2) extending in a vehicle longitudinal direction;
a seat (15) disposed above the body frame (2);
a rear arm (20) supported swingably by the body frame (2) and disposed below the seat (15);
a rear wheel (22) supported on the rear arm (20) and disposed downward relative to the seat (15); and
a rear fender (30) at least a portion of which being disposed below the seat (15) and
above the rear wheel (22), wherein:
the rear fender (30) comprises a fender main body (31) disposed above the rear wheel (22), a left side guard (40) disposed to the left of the rear wheel (22), and a right side guard (50) disposed to the right of the rear wheel (22);
the left side guard (40) comprises a left side guard body portion (43) at least a portion of which being positioned above the rear arm (20) as viewed from the left side of the motorcycle, and a first left arm portion (41) extending from the left side guard body portion (43) to the fender main body (31);
the right side guard (50) comprises a right side guard body portion (53) at least a portion of which being positioned above the rear arm (20) as viewed from the right side of the motorcycle, and a first right arm portion (51) extending from the right side guard body portion (53) to the fender main body (31);
the first left arm portion (41) is connected to the fender main body (31) at a position rearward relative to the center (22c) of the rear wheel (22);
the first right arm portion (51) is connected to the fender main body (31) at a position rearward relative to the center (22c) of the rear wheel (22), **characterized in that** each of the fender main body (31), the left side guard (40), and the right side guard (50) is formed of plastic;
the left side guard body portion (43) is connected to the fender main body (31) at a
position frontward relative to the center (22c) of the rear wheel (22), and
the right side guard body portion (53) is connected to the fender main body (31) at a position frontward relative to the center (22c) of the rear wheel (22);
a first left opening (47) is defined by the fender main body (31), the left side guard body portion (43), and the first left arm portion (41), as viewed from the left side of the motorcycle; and
a first right opening (57) is defined by the fender main body (31), the right side guard body portion (53), and the first right arm portion (51), as viewed from the right side of the motorcycle.

2. A motorcycle according to claim 1, **characterized in that** the rear wheel (22) includes an axle shaft (22A); and the motorcycle further comprises:
a power unit (16) including an output shaft (19);
a first sprocket (19A) secured to the output shaft (19);
a second sprocket (22B) secured to the axle shaft (22A) of the rear wheel (22) and
disposed to the left of the rear wheel (22);
a chain (23) wrapped around the first sprocket (19A) and the second sprocket (22B); and
a chain cover (60) disposed to the left of a portion of the chain (23), wherein
the chain cover (60) is integrally formed with the left side guard (40).

3. A motorcycle according to claim 2, **characterized in that** a gap (W1) between the left side guard (40) and the second sprocket (22B) along a vehicle width direction is smaller than a width (W2) of the chain (23).

4. A motorcycle according to claim 1, **characterized in that** the rear wheel (22) includes an axle shaft (22A); and the motorcycle further comprises:
a power unit (16) including an output shaft (19);
a first sprocket (19A) secured to the output shaft (19);
a second sprocket (22B) secured to the axle shaft (22A) of the rear wheel (22) and
disposed to the right of the rear wheel (22);
a chain (23) wrapped around the first sprocket (19A) and the second sprocket (22B); and
a chain cover (60) disposed to the right of a portion of the chain (23), wherein
the chain cover (60) is integrally formed with the right side guard (50).

5. A motorcycle according to claim 4, **characterized in that** a gap (W1) between the right side guard (50) and the second sprocket (22B) along a vehicle width direction is smaller than a width (W2) of the chain (23).

6. A motorcycle according to any one of claims 1 to 5, **characterized in that** a front end (31 f) of the fender main body (31) is positioned frontward relative to a front end (22f) of the rear wheel (22), and a rear end (31 b) of the fender main body (31) is positioned rearward relative to a rear end (22b) of the rear wheel (22).

7. A motorcycle according to any one of claims 1 to 6, **characterized in that** the left side guard body portion (43) and/or the right side guard body portion (53) has a C-shaped cross-sectional shape.

8. A motorcycle according to any one of claims 1 to 7, **characterized in that** the first left arm portion (41) and/or the first right arm portion (51) has a C-shaped cross-sectional shape.

9. A motorcycle according to any one of claims 1 to 8, **characterized in that** the left side guard (40) includes a second left arm portion (42) extending from the left side guard body portion (43) to the fender main body (31) and connected to the fender main body (31) at a position rearward relative to the first left arm portion (41); and
at least a portion of a second left opening (48) is defined by the fender main body (31), the first left arm portion (41), and the second left arm portion (42), as viewed from the left side of the motorcycle.

10. A motorcycle according to any one of claims 1 to 9, **characterized in that** the right side guard (50) includes a second right arm portion (52) extending from the right side guard body portion (53) to the fender main body (31) and connected to the fender main body (31) at a position rearward relative to the first right arm portion (51); and
at least a portion of a second right opening (58) is defined by the fender main body (31), the first right arm portion (51), and the second right arm portion (52), as viewed from the right side of the motorcycle.

11. A motorcycle according to claim 10, **characterized in that** the second right arm portion (52) has a C-shaped cross-sectional shape.

12. A motorcycle according to any one of claims 1 to 11, **characterized in that** a third left opening (49) is defined by the left side guard body portion (43) and the rear arm (20), as viewed from the left side of the motorcycle.

13. A motorcycle according to any one of claims 1 to 12, **characterized in that** a third right opening (59) is defined by the right side guard body portion (53) and the rear arm (20), as viewed from the right side of the motorcycle.

14. A motorcycle according to any one of claims 1 to 13, **characterized in that** the fender main body (31) comprises a left wall (35) extending vertically and positioned to the left of the rear wheel (22), and a right wall (36) extending vertically and positioned to the right of the rear wheel (22);
the left wall (35) comprises, as viewed from the left side of the motorcycle, a first left wall portion (35p) positioned on the vertical line (V1) through the center (22c) of the rear wheel (22), and a second left wall portion (35q) positioned at the rear of the first left wall portion (35p);
the right wall (36) comprises, as viewed from the right side of the motorcycle, a first right wall portion (36p) positioned on the vertical line (V2) through the center (22c) of the rear wheel (22), and a second right wall portion (36q) positioned at the rear of the first rear wall portion (36p);
a dimension of the second left wall portion (35q) along a radial direction of the rear wheel (22) is greater than a dimension of the first left wall portion (35p) along a radial direction of the rear wheel (22);
a dimension of the second right wall portion (36q) along a radial direction of the rear wheel (22) is greater than a dimension of the first right wall portion (36p) along a radial direction of the rear wheel (22);
the first left arm portion (41) is mounted to the second left wall portion (35q); and
the first right arm portion (51) is mounted to the second right wall portion (36q).

15. A motorcycle according to any one of claims 1 to 14, **characterized in that** the body frame (2) includes a frame portion (6A) disposed above the rear fender (30);
the fender main body (31) comprises a first circumferential wall (34a) positioned frontward relative to the center (22c) of the rear wheel (22), a second circumferential wall (34b) positioned at the rear of the first circumferential wall (34a), and a third circumferential wall (34c) positioned at the rear of the second circumferential wall (34b); and
at least a portion of the second circumferential wall (34b) is disposed below the frame portion (6A), and the second circumferential wall (34b) is recessed radially inward of the rear wheel (22) relative to the first circumferential wall (34a) and the third circumferential wall (34c).

## Patentansprüche

1. Ein Motorrad, das umfasst:
einen Körper-Rahmen (2), der sich in die Fahrzeug-Längs-Richtung erstreckt;
einen Sitz (15), angeordnet oberhalb des Körper-Rahmens (2);
einen hinteren Arm (20), schwingend gelagert durch den Körper-Rahmen (2) und unterhalb des Sitzes (15) positioniert;
ein Hinterrad (22), gelagert an dem hinteren Arm (20) und unterhalb relativ zu dem Sitz (15) positioniert; und
ein hinteres Schutzblech (30), zumindest ein Abschnitt desselben ist unter dem Sitz (15) und oberhalb des Hinterrads (20) positioniert, wobei:
das hintere Schutzblech (30) einen Schutzblech-Hauptkörper (31), positioniert oberhalb des Hinterrads (22), einen linken Seitenschutz (40), positioniert links von dem Hinterrad (22),
und einen rechten Seitenschutz (50), positioniert rechts von dem Hinterrad (22), umfasst;
der linke Seitenschutz (40) umfasst einen linken Seitenschutz-Körperabschnitt (43),
zumindest ein Teil desselben ist oberhalb des hinteren Arms (20) positioniert, wenn von der linke Seite des Motorrads betrachtet, und einen ersten linken Armabschnitt (41), der sich von dem linken Seitenschutz-Körperabschnitt (43) zu dem Schutzblech-Hauptkörper (31) erstreckt;
der rechte Seitenschutz (50) umfasst einen rechten Seitenschutz-Körperabschnitt (53) zumindest ein Teil desselben ist oberhalb des hinteren Arms (20) positioniert, wenn von der rechten Seite des Motorrads betrachtet, und einen ersten rechten Armabschnitt (51), der sich von dem rechten Seitenschutz-Körperabschnitt (53) zu dem Schutzblech-Hauptkörper (31) erstreckt;
der erste linke Armabschnitt (41) ist mit dem Schutzblech-Hauptkörper (31) an einer Position relativ rückwärtig zu der Mitte (22c) des Hinterrads (22) verbunden;
der erste rechte Armabschnitt (51) ist mit dem Schutzblech-Hauptkörper (31) an einer Position relativ hinter der Mitte (22c) des Hinterrads (22) verbunden, **dadurch gekennzeichnet, dass** jeder der Schutzblech-Hauptkörper (31), der linke Seitenschutz (40) und der rechte Seitenschutz (50) aus Plastik gebildet ist;
der linke Seitenschutz-Körperabschnitt (43) ist mit dem Schutzblech-Hauptkörper (31) an einer Position relativ vor der Mitte (22c) des Hinterrads (22) verbunden, und der rechte Seitenschutz-Körperabschnitt (53) ist mit dem Schutzblech-Hauptkörper (31) an einer Position relativ vor der Mitte (22c) des Hinterrads (22) verbunden;
eine erste linke Öffnung (47) ist durch den Schutzblech-Hauptkörper (31), den linken Seitenschutz-Körperabschnitt (43), und den ersten linken Armabschnitt (41) definiert, wenn von der linken Seite des Motorrads betrachtet; und
eine erste rechte Öffnung (57) ist durch den Schutzblech-Hauptkörper (31), den rechten Seitenschutz-Körperabschnitt (53) und den ersten rechten Armabschnitt (51) definiert,
wenn von der rechten Seite des Motorrads betrachtet.

2. Ein Motorrad gemäß Anspruch 1, **dadurch gekennzeichnet, dass** das Hinterrad (22) eine Achswelle (22A) beinhaltet; und das Motorrad weiterhin umfasst:
eine Leistungseinheit (16), die eine Ausgangswelle (19) beinhaltet;
ein erstes Zahnrad (19A), gesichert an der Ausgangswelle (19);
ein zweites Zahnrad (22B), gesichert an der Achswelle (22A) des Hinterrads (22) und
positioniert links an dem Hinterrad (22);
eine Kette (23), gewickelt um das erste Zahnrad (19A) und das zweite Zahnrad (22B); und
eine Kettenabdeckung (16), positioniert links an einem Abschnitt der Kette (23), wobei die Kettenabdeckung (60) integral mit dem linken Seitenschutz (40) ausgebildet ist.

3. Ein Motorrad gemäß Anspruch 2, **dadurch gekennzeichnet, dass** ein Spalt (W1) zwischen dem linken Seitenschutz (40) und dem zweiten Zahnrad (22B), entlang der Fahrzeug-Breiten-Richtung, kleiner ist als eine Breite (W2) der Kette (23).

4. Ein Motorrad gemäß Anspruch 1, **dadurch gekennzeichnet, dass** das Hinterrad (22) eine Achswelle (22A) beinhaltet; und das Motorrad weiterhin umfasst:
eine Leistungseinheit (16), die eine Ausgangswelle (19) beinhaltet;
ein erstes Zahnrad (19A), gesichert an der Ausgangswelle (19);
ein zweites Zahnrad (22B), gesichert an der Achswelle (22A) des Hinterrads (22) und
positioniert rechts an dem Hinterrad (22);
eine Kette (23), gewickelt um das erste Zahnrad (19A) und das zweite Zahnrad (22B); und
eine Kettenabdeckung (60), positioniert rechts von einem Abschnitt der Kette (23), wobei die Kettenabdeckung (60) integral mit dem rechten Seitenschutz (50) ausgebildet ist.

5. Ein Motorrad gemäß Anspruch 4, **dadurch gekennzeichnet, dass** ein Spalt (W1) zwischen dem rechten Seitenschutz (50) und dem zweiten Zahnrad (22B), entlang der Fahrzeug-Breiten-Richtung, kleiner ist als eine Breite (W2) der Kette (23).

6. Ein Motorrad gemäß irgendeinem der Ansprüche 1 bis 5, **dadurch gekennzeichnet, dass** ein Vorder-Ende (31f) des Schutzblech-Hauptkörpers (31) relativ vor einem Vorder-Ende (22f) des Hinterrads (22) positioniert ist, und ein Hinter-Ende (31 b) des Schutzblech-Hauptkörpers (31) relativ hinter einem Hinter-Ende (22b) des Hinterrads (22) positioniert ist.

7. Ein Motorrad gemäß irgendeinem der Ansprüche 1 bis 6, **dadurch gekennzeichnet, dass** der Links-Seiten-Seitenschutz-Körperabschnitt (43) und / oder der Rechts-Seiten-Seitenschutz-Körperabschnitt (53) eine C-förmige Querschnittsform hat.

8. Ein Motorrad gemäß irgendeinem der Ansprüche 1 bis 7, **dadurch gekennzeichnet, dass** der erste linke Armabschnitt (41) und / oder der ersten rechten Armabschnitt (51) eine C-förmige Querschnittsform hat.

9. Ein Motorrad gemäß irgendeinem der Ansprüche 1 bis 8, **dadurch gekennzeichnet, dass** der linke Seitenschutz (40) einen zweiten linken Armabschnitt (42) beinhaltet, der sich von dem linken Seitenschutz-Körperabschnitt (43) zu dem Schutzblech-Hauptkörper (31) erstreckt und mit dem Schutzblech-Hauptkörper (31) an einer Position relativ hinten zu dem ersten linken Armabschnitt (41) verbunden ist; und zumindest ein Abschnitt einer zweiten linken Öffnung (48) durch den Schutzblech-Hauptkörper (31), den ersten linken Armabschnitt (41) und den zweiten linken Armabschnitt (42) definiert ist, wenn von der linken Seite des Motorrads betrachtet.

10. Ein Motorrad gemäß irgendeinem der Ansprüche 1 bis 9, **dadurch gekennzeichnet, dass** der rechte Seitenschutz (50) einen zweiten rechten Armabschnitt (52) beinhaltet, der sich von dem rechten Seitenschutz-Körperabschnitt (53) zu dem Schutzblech-Hauptkörper (31) erstreckt und mit dem Schutzblech-Hauptkörper (31) an einer Position relativ hinten zu dem ersten rechten Armabschnitt (51) verbunden ist; und
zumindest ein Abschnitt einer zweiten rechten Öffnung (58) durch den Schutzblech-Hauptkörper (31), den ersten rechten Armabschnitt (51) und den zweiten rechten Armabschnitt (52) definiert ist, wenn von der rechten Seite des Motorrads betrachtet.

11. Ein Motorrad gemäß Anspruch 10, **dadurch gekennzeichnet, dass** der zweite rechte Armabschnitt (52) eine C-förmige Querschnittsform hat.

12. Ein Motorrad gemäß irgendeinem der Ansprüche 1 bis 11, **dadurch gekennzeichnet, dass** eine dritte linke Öffnung (49) durch den linken Seitenschutz-Körperabschnitt (43) und den hinteren Arm (20) definiert ist, wenn von der linken Seite des Motorrads betrachtet.

13. Ein Motorrad gemäß irgendeinem der Ansprüche 1 bis 12, **dadurch gekennzeichnet, dass** eine dritte rechte Öffnung (49) durch den rechten Seitenschutz-Körperabschnitt (53) und den hinteren Arm (20) definiert ist, wenn von der rechten Seite des Motorrads betrachtet.

14. Ein Motorrad gemäß irgendeinem der Ansprüche 1 bis 13, **dadurch gekennzeichnet, dass** der Schutzblech-Hauptkörper (31) eine linke Wand (35), die sich vertikal und positioniert links von dem Hinterrad (22) erstreckt, und eine rechte Wand (36), die sich vertikal und positioniert rechts von dem Hinterrad (22) erstreckt, umfasst;
die linke Wand (35) umfasst, wenn betrachtet von der linken Seite des Motorrads, einen ersten linken Wandabschnitt (35p), positioniert auf einer vertikalen Linie (V1) durch die Mitte (22c) des Hinterrads (22), und einen zweiten linken Wandabschnitt (35q), positioniert rechts von dem ersten linken Wandabschnitt (35p);
die rechte Wand (36) umfasst, wenn betrachtet von der rechten Seite des Motorrads, einen ersten rechten Wandabschnitt (36p), positioniert auf der vertikalen Linie (V2) durch die Mitte (22c) des Hinterrads (22), und einen zweiten rechten Wandabschnitt (36q), positioniert rechts von dem ersten hinteren Wandabschnitt (36p);
eine Abmessung von den zweiten linken Wandabschnitt (35q) entlang einer radialen Richtung des Hinterrads (22) ist größer als eine Abmessung von dem ersten linken Wandabschnitt (35p) entlang einer radialen Richtung des Hinterrads (22);
eine Abmessung von dem zweiten rechten Wandabschnitt (36q) entlang einer radialen Richtung des Hinterrads (22) ist größer als eine Abmessung von dem ersten rechten Wandabschnitt (36p) entlang einer Radialrichtung des Hinterrads (22);
der erste linke Armabschnitt (41) ist an dem zweiten linken Wandabschnitt (35q) montiert; und der erste rechte Armabschnitt (51) ist an dem zweiten rechten Wandabschnitt (36q) montiert.

15. Ein Motorrad gemäß irgendeinem der Ansprüche 1 bis 14, **dadurch gekennzeichnet, dass** der Körper-Rahmen (2) einen Rahmenabschnitt (6A) beinhaltet, der oberhalb des hinteren Schutzblechs (30) positioniert ist;
der Schutzblech-Hauptkörper (31) umfasst eine erste Umfangswand (34a), positioniert relativ vor der Mitte (22c) des Hinterrads (22), eine zweite Umfangswand (34b), positioniert hinter der ersten Umfangswand (34a), und eine dritte Umfangswand (34c), positioniert hinter der zweiten Umfangswand (34b); und
zumindest ein Abschnitt der zweiten Umfangswand (34b) ist unterhalb des Rahmenabschnitts (6A) positioniert, und die zweite Umfangswand (34b) ist radial nach innen von dem Hinterrad (22), relativ zu der ersten Umfangswand (34a) und der dritten Umfangswand (34c), ausgenommen.

## Revendications

1. Motocyclette comprenant :
un cadre (2) s'étendant dans la direction longitudinale du véhicule,
un siège (15) disposé au-dessus du cadre (2),
un bras arrière (20) supporté en pouvant osciller par le cadre (2) et disposé en dessous du siège (15),
une roue arrière (22) supportée sur le bras arrière (20) et disposée vers le bas par rapport au siège (15), et
un garde-boue arrière (30) dont au moins une partie est disposée en dessous du siège (15) est au-dessus de la roue arrière (22), où
le garde-boue arrière (30) comprend un corps principal de garde-boue (31) disposé au-dessus de la roue arrière (22), une protection latérale gauche (40) disposée sur la gauche de la roue arrière (22) et une protection latérale droite (50) disposée sur la droite de la roue arrière (22),
la protection latérale gauche (40) comprend une partie formant corps de protection latérale gauche (43) dont au moins une partie est positionnée au-dessus du bras arrière (20) comme on peut le voir depuis le côté gauche de la motocyclette, et une première partie de bras gauche (41) s'étendant depuis la partie formant corps de protection latérale gauche (43) jusqu'au corps principal de garde-boue (31),
la protection latérale droite (50) comprend une partie formant corps de protection latérale droite (53) dont au moins une partie est positionnée au-dessus du bras arrière (20) comme on peut le voir depuis le côté droit de la motocyclette, et une première partie de bras droit (51) s'étendant depuis la partie formant corps de protection latérale droite (53) jusqu'au corps principal de garde-boue (31),
la première partie de bras gauche (41) est raccordée au corps principal de garde-boue (31) au niveau d'une position vers l'arrière par rapport au centre (22c) de la roue arrière (22),
la première partie de bras droit (51) est raccordée au corps principal de garde-boue (31) au niveau d'une position vers l'arrière par rapport au centre (22c) de la roue arrière (22), **caractérisée en ce que**
chacun du corps principal de garde-boue (31), de la protection latérale gauche (40) et de la protection latérale droite (50) est formé de matière plastique,
la partie formant corps de protection latérale gauche (43) est raccordée au corps principal de garde-boue (31) au niveau d'une position vers l'avant par rapport au centre (22c) de la roue arrière (22), et
la partie formant corps de protection latérale droite (53) est raccordée au corps principal de garde-boue (31) au niveau d'une position vers l'avant par rapport au centre (22c) de la roue arrière (22),
une première ouverture gauche (47) est définie par le corps principal de garde-boue (31), la partie formant corps de protection latérale gauche (43) et la première partie de bras gauche (41) comme on peut le voir depuis le côté gauche de la motocyclette, et
une première ouverture droite (57) est définie par le corps principal de garde-boue (31), la partie formant corps de protection latérale droite (53) et la première partie de bras droit (51) comme on peut le voir depuis le côté droit de la motocyclette.

2. Motocyclette selon la revendication 1, **caractérisée en ce que** la roue arrière (22) inclut un arbre d'essieu (22A), et la motocyclette comprend en outre :
une unité de puissance (16) incluant un arbre de sortie (19),
un premier pignon (19A) fixé sur l'arbre de sortie (19),
un second pignon (22B) fixé sur l'arbre d'essieu (22A) de la roue arrière (22) et disposé sur la gauche de la roue arrière (22),
une chaîne (23) enroulée autour du premier pignon (19A) et du second pignon (22B), et
un carter de chaîne (60) disposé sur la gauche d'une partie de la chaîne (23), où
le carter de chaîne (60) est formé en une seule pièce avec la protection latérale gauche (40).

3. Motocyclette selon la revendication 2, **caractérisée en ce qu'**un intervalle (W1) entre la protection latérale gauche (40) et le second pignon (22B) le long de la direction de la largeur du véhicule est plus petit que la largeur (W2) de la chaîne (23).

4. Motocyclette selon la revendication 1, **caractérisée en ce que** la roue arrière (22) inclut un arbre d'essieu (22A), et la motocyclette comprend en outre :
une unité de puissance (16) incluant un arbre de sortie (19),
un premier pignon (19A) fixé sur l'arbre de sortie (19),
un second pignon (22B) fixé sur l'arbre d'essieu (22A) de la roue arrière (22) et disposé sur la droite de la roue arrière (22),
une chaîne (23) enroulée autour du premier pignon (19A) et du second pignon (22B), et
un carter de chaîne (60) disposé sur la droite d'une partie de la chaîne (23), où
le carter de chaîne (60) est formé en une seule pièce avec la protection latérale droite (50).

5. Motocyclette selon la revendication 4, **caractérisée en ce qu'**un intervalle (W1) entre la protection latérale droite (50) et le second pignon (22B) le long de la direction de la largeur du véhicule est plus petit que la largeur (W2) de la chaîne (23).

6. Motocyclette selon l'une quelconque des revendications 1 à 5, **caractérisée en ce que** l'extrémité avant (31f) du corps principal de garde-boue (31) est positionnée vers l'avant par rapport à l'extrémité avant (22f) de la roue arrière (22), et l'extrémité arrière (31b) du corps principal de garde-boue (31) est positionnée vers l'arrière par rapport à l'extrémité arrière (22b) de la roue arrière (22)

7. Motocyclette selon l'une quelconque des revendications 1 à 6, **caractérisée en ce que** la partie formant corps de protection latérale gauche (43) et/ou la partie formant corps de protection latérale droite (53) présentent une forme de C en coupe transversale.

8. Motocyclette selon l'une quelconque des revendications 1 à 7, **caractérisée en ce que** la première partie de bras gauche (41) et/ou la première partie de bras droit (51) présentent une forme de C en coupe transversale.

9. Motocyclette selon l'une quelconque des revendications 1 à 8, **caractérisée en ce que** la protection latérale gauche (40) inclut une seconde partie de bras gauche (42) s'étendant depuis la partie formant corps de protection latérale gauche (43) jusqu'au corps principal de garde-boue (31) et raccordée au corps principal de garde-boue (31) au niveau d'une position vers l'arrière par rapport à la première partie de bras gauche (41), et
au moins une partie d'une deuxième ouverture gauche (48) est définie par le corps principal de garde-boue (31), la première partie de bras gauche (41) et la seconde partie de bras gauche (42) comme on peut le voir depuis le côté gauche de la motocyclette.

10. Motocyclette selon l'une quelconque des revendications 1 à 9, **caractérisée en ce que** la protection latérale droite (50) inclut une seconde partie de bras droit (52) s'étendant depuis la partie formant corps de protection latérale droite (53) jusqu'au corps principal de garde-boue (31) et raccordée au corps principal de garde-boue (31) au niveau d'une position vers l'arrière par rapport à la première partie de bras droit (51), et
au moins une partie d'une deuxième ouverture droite (58) est définie par le corps principal de garde-boue (31), la première partie de bras droit (51) et la seconde partie de bras droit (52) comme on peut le voir depuis le côté droit de la motocyclette.

11. Motocyclette selon la revendication 10, **caractérisée en ce que** la seconde partie de bras droit (52) présente une forme de C en coupe transversale.

12. Motocyclette selon l'une quelconque des revendications 1 à 11, **caractérisée en ce qu'**une troisième ouverture gauche (49) est définie par la partie formant corps de protection latérale gauche (43) et le bras arrière (20) comme on peut le voir depuis le côté gauche de la motocyclette.

13. Motocyclette selon l'une quelconque des revendications 1 à 12, **caractérisée en ce qu'**une troisième ouverture droite (59) est définie par la partie formant corps de protection latérale droite (53) et le bras arrière (20) comme on peut le voir depuis le côté droit de la motocyclette.

14. Motocyclette selon l'une quelconque des revendications 1 à 13, **caractérisée en ce que** le corps principal de garde-boue (31) comprend une paroi gauche (35) s'étendant verticalement et positionnée sur la gauche de la roue arrière (22), ainsi qu'une paroi droite (36) s'étendant verticalement et positionnée sur la droite de la roue arrière (22),
la paroi gauche (35) comprend, comme on peut le voir depuis le côté gauche de la motocyclette, une première partie de paroi gauche (35p) positionnée sur la verticale (V1) passant par le centre (22c) de la roue arrière (22) et une seconde partie de paroi gauche (35q) positionnée à l'arrière de la première partie de paroi gauche (35p),
la paroi droite (36) comprend, comme on peut le voir depuis le côté droit de la motocyclette, une première partie de paroi droite (35p) positionnée sur la verticale (V2) passant par le centre (22c) de la roue arrière (22) et une seconde partie de paroi droite (36q) positionnée à l'arrière de la première partie de paroi droite (36p),
la dimension de la seconde partie de paroi gauche (35q) le long de la direction radiale de la roue arrière (22) est supérieure à la dimension de la première partie de paroi gauche (35p) le long de la direction radiale de la roue arrière (22),
la dimension de la seconde partie de paroi droite (36q) le long de la direction radiale de la roue arrière (22) est supérieure à la dimension de la première partie de paroi droite (36p) le long de la direction radiale de la roue arrière (22),
la première partie de bras gauche (41) est montée sur la seconde partie de paroi gauche (35q) et la première partie de bras droit (51) est montée sur la seconde partie de paroi droite (36q).

15. Motocyclette selon l'une quelconque des revendications 1 à 14, **caractérisée en ce que** le cadre (2) inclut une partie de cadre (6A) placée au-dessus du garde-boue arrière (30),
le corps principal de garde-boue (31) comprend une première paroi circonférentielle (34a) positionnée vers l'avant par rapport au centre (22c) de la roue arrière (22), une deuxième paroi circonférentielle (34b) positionnée à l'arrière de la première paroi circonférentielle (34a) et une troisième paroi circonférentielle (34c) positionnée à l'arrière de la deuxième paroi circonférentielle (34b), et
au moins une partie de la deuxième paroi circonférentielle (34b) est disposée en dessous de la partie de cadre (6A), et la seconde paroi circonférentielle (34b) est en retrait radialement vers l'intérieur de la roue arrière (22) par rapport à la première paroi circonférentielle (34a) et à la troisième paroi circonférentielle (34c).
